# EUROPÄISCHE PATENTSCHRIFT

(11) **EP 3 243 361 B1**
(45) Veröffentlichungstag und Bekanntmachung des Hinweises auf die Patenterteilung: **05.05.2021**
(21) Anmeldenummer: 15807920.2
(22) Anmeldetag: 10.12.2015
(51) Int. Cl.: H05B 3/84, B23K 101/36

(54) **TRANSPARENTE SCHEIBE MIT ELEKTRISCHER HEIZSCHICHT, SOWIE HERSTELLUNGSVERFAHREN HIERFÜR**
TRANSPARENT PANE WITH ELECTRIC HEATING LAYER AND METHOD FOR PRODUCING SAME
PLAQUE TRANSPARENTE DOTÉE D'UNE COUCHE CHAUFFANTE ÉLECTRIQUE, AINSI QUE PROCÉDÉ DE FABRICATION CORRESPONDANT

(30) Priorität: 16.12.2014 EP 14198262
(43) Veröffentlichungstag der Anmeldung: 15.11.2017
(73) Patentinhaber: SAINT-GOBAIN GLASS FRANCE, 92400 Courbevoie (FR)
(72) Erfinder: SCHALL, Günther, 52372 Kreuzau (DE); SCHULZ, Valentin, 52382 Niederzier (DE)
(74) Vertreter: Gebauer, Dieter Edmund
(86) Internationale Anmeldenummer: PCT/EP2015/079223
(87) Internationale Veröffentlichungsnummer: WO 2016/096593

(56) Entgegenhaltungen:
- WO-A1-2013/050233
- WO-A1-2014/044410
- DE-A1-102007 008 833

## Beschreibung

Die Erfindung liegt auf dem Gebiet der Scheibentechnik und betrifft eine transparente Scheibe mit einer elektrischen Heizschicht sowie ein Verfahren zu deren Herstellung.

Transparente Scheiben mit einer elektrischen Heizschicht sind als solche wohlbekannt und bereits vielfach in der Patentliteratur beschrieben worden. Lediglich beispielhaft sei diesbezüglich auf DE 10 2007 008 833 A1, DE 10 2008 018147 A1, DE 10 2008 029986 A1, WO 2013/050233 A1 und WO 2014/044410 A1 verwiesen. In Kraftfahrzeugen werden sie häufig als Windschutzscheiben eingesetzt, da das zentrale Sichtfeld aufgrund gesetzlicher Vorgaben keine wesentlichen Sichteinschränkungen aufweisen darf. Durch die von der Heizschicht erzeugte Wärme können binnen kurzer Zeit kondensierte Feuchtigkeit, Eis und Schnee entfernt werden. Insbesondere kann DE 10 2007 008 833 A1 ein mäandrierende und rechteckförmige Leiterbahn für eine Zusatzheizung entnommen werden.

Der Heizstrom wird in der Regel durch mindestens ein Paar streifen- bzw. bandförmiger Elektroden in die Heizschicht eingeleitet. Diese sollen als Sammelleiter den Heizstrom möglichst gleichmäßig in die Heizschicht einleiten und auf breiter Front verteilen. Der elektrische Flächenwiderstand der Heizschicht ist bei den zurzeit in der industriellen Serienfertigung eingesetzten Materialien relativ hoch und kann in der Größenordnung von einigen Ohm pro Flächeneinheit liegen. Um dennoch eine für die praktische Anwendung genügende Heizleistung zu erzielen, muss die Speisespannung entsprechend hoch sein, wobei aber beispielsweise in Kraftfahrzeugen standardmäßig nur eine Bordspannung von 12 bis 24 Volt zur Verfügung steht. Da der Flächenwiderstand der Heizschicht mit der Länge der Strompfade des Heizstroms zunimmt, sollten die Sammelleiter gegensätzlicher Polarität einen möglichst geringen Abstand voneinander haben. Bei Fahrzeugscheiben, die gewöhnlich breiter als hoch sind, werden die Sammelleiter deshalb entlang der beiden längeren Scheibenränder angeordnet, so dass der Heizstrom über den kürzeren Weg der Scheibenhöhe fließen kann. Diese Gestaltung hat jedoch zur Folge, dass der Bereich einer Ruhe- oder Parkstellung von zum Wischen der Scheibe vorgesehenen Scheibenwischern gewöhnlich außerhalb des Heizfelds liegt, so dass dort keine ausreichende Heizleistung mehr vorliegt und die Scheibenwischer festfrieren können.

Deshalb ist es notwendig im Bereich der Ruhe- oder Parkstellung der Scheibenwischer zusätzliche Heizmittel anzuordnen. In DE 101 60 806 A1 ist beispielsweise der Ruheoder Parkstellungsbereich durch einen Abschnitt der elektrischen Heizschicht beheizbar, der mittels weiterer Sammelleiter und zusätzlichen Außenanschlüsse kontaktiert wird.

In der WO 2012/110381 A1 hingegen wird die Scheibe im Ruhe- und Parkbereich durch eine Drahtheizung erwärmt. Die Drahtheizung hat den Nachteil, dass die Scheibe nur in der unmittelbaren Umgebung des Drahts ausreichend heizbar ist, was zu einer geringeren Homogenität der Heizleistung und Temperaturverteilung führt. Eine geringe Homogenität der Heizleistung hat bei einer gewünschten oder vorgegebenen Abtauzeit einen höheren Energieeinsatz zur Folge.

Demgegenüber besteht die Aufgabe der vorliegenden Erfindung darin, transparente Scheiben mit elektrischer Heizschicht in vorteilhafter Weise weiterzubilden. Diese und weitere Aufgaben werden nach dem Vorschlag der Erfindung durch eine transparente Scheibe mit den Merkmalen des unabhängigen Patentanspruchs gelöst. Vorteilhafte Ausgestaltungen der Erfindung sind durch die Merkmale der Unteransprüche angegeben.

Die erfindungsgemäße transparente Scheibe umfasst:
- eine elektrische Heizschicht, die sich zumindest über einen Teil der Scheibenoberfläche III erstreckt und die in einen Hauptheizbereich und einen davon elektrisch isolierten Zusatzheizbereich unterteilt ist,
- Anschlussmittel, die mit einer Spannungsquelle elektrisch verbindbar sind und die mindestens einen ersten Sammelleiter und einen zweiten Sammelleiter umfassen, wobei die Sammelleiter jeweils mit der Heizschicht im Hauptheizbereich in direktem Kontakt elektrisch leitend so verbunden sind, dass nach Anlegen einer Speisespannung ein Heizstrom über ein von der Heizschicht gebildetes Heizfeld fließt,
- mindestens ein elektrisches Linienheizelement, das zumindest abschnittsweise, bevorzugt zumindest überwiegend und besonders bevorzugt vollständig, im Zusatzheizbereich der Heizschicht angeordnet ist, wobei
- das Linienheizelement in direktem Kontakt elektrisch leitend mit der Heizschicht verbunden ist,
- das Linienheizelement mit einer Spannungsquelle elektrisch verbindbar ist,
- das Linienheizelement einen solchen ohmschen Widerstand hat, dass nach Anlegen der Speisespannung der Zusatzheizbereich heizbar ist und
- das Linienheizelement derart ausgebildet ist, dass nach Anlegen der Speisespannung zwischen Abschnitten des Linienheizelements ein Heizstrom durch die Heizschicht im Zusatzheizbereich fließen kann und der Zusatzheizbereich dadurch zusätzlich heizbar ist.

Die Heizschicht ist eine elektrisch heizbare, transparente Schicht und erstreckt sich zumindest über einen wesentlichen Teil der Scheibenfläche.

Die Heizschicht ist in einen Hauptheizbereich und einen davon elektrisch isolierten Zusatzheizbereich unterteilt.

Der Hauptheizbereich erstreckt sich insbesondere über das (zentrale) Sichtfeld der Scheibe und ist durch elektrische Anschlussmittel mit einer Spannungsquelle elektrisch verbindbar. Die Anschlussmittel verfügen über Außenanschlüsse, die zum Verbinden mit den beiden Polen einer Spannungsquelle vorgesehen sind. Zudem umfassen die Anschlussmittel mindestens zwei Sammelleitern, die zum Einleiten eines Heizstroms in die Heizschicht dienen und die mit der Heizschicht elektrisch so verbunden sind, dass nach Anlegen der Speisespannung ein Heizstrom über ein von der Heizschicht gebildetes Heizfeld fließt. Die Sammelleiter können beispielsweise in Form von Streifen- bzw. Bandelektroden ("Bus bars") ausgebildet sein, um den Heizstrom breit verteilt in die Heizschicht einzuleiten. Bevorzugt sind die Sammelleiter jeweils über deren volle Bandlänge hinweg mit der Heizschicht in direktem Kontakt elektrisch leitend verbunden. Im Vergleich zur hochohmigen Heizschicht haben die Sammelleitern einen relativ geringen bzw. niederohmigen elektrischen Widerstand.

Die erfindungsgemäße Scheibe verfügt zudem über mindestens einen Zusatzheizbereich, in dem die Heizschicht vom Hauptheizbereich elektrisch isoliert ist. Der Zusatzheizbereich ist somit durch den durch die Sammelleiter in die Heizschicht eingeleiteten Heizstrom nicht direkt beheizbar.

Im Zusatzheizbereich ist mindestens ein linienförmiges elektrisch beheizbares Heizelement (im Weiteren als "Linienheizelement" bezeichnet) angeordnet. Das Linienheizelement ist in direktem Kontakt mit der Heizschicht im Zusatzheizbereich und dadurch mit dieser elektrisch leitend verbunden.

Das Linienheizelement ist zumindest abschnittsweise im Zusatzheizbereich angeordnet. In einer vorteilhaften Ausgestaltung der erfindungsgemäßen Scheibe ist das Linien-element zumindest überwiegend im Zusatzheizbereich der Heizschicht angeordnet. Zumindest überwiegend bedeutet zu mehr als 50% der Länge des Linienheizelements, bevorzugt zu mehr als 70% und besonders bevorzugt zu mehr als 90%.

Das Linienheizelement ist bei einem mäanderförmigen Verlauf, besonders bei einem dreieckförmigen, trapezförmigen oder sinusförmigen Verlauf insbesondere in den Umkehrbereichen, beispielsweise im oberen und/oder unteren Bereich außerhalb der Heizschicht in einem heizschichtfreien Bereich, wie im heizschichtfreien Randbereich oder heizschichtfreiem Trennbereich angeordnet sein. Dadurch wird eine weitere Erhöhung der Homogenität der Heizleistungsverteilung und der Temperaturverteilung erzielt und lokale Überhitzungen, sogenannte Hotspots, reduziert oder vermieden.

In einer weiteren vorteilhaften Ausgestaltungsform ist das Linienheizelement im Wesentlichen vollständig im Zusatzheizbereich der Heizschicht angeordnet. Dies ist besonders vorteilhaft, wenn eine maximale Heizleistung im Zusatzheizbereich gewünscht wird. Das Linienheizelement hat einen solchen ohmschen Widerstand, dass nach Anlegen einer Speisespannung an die Anschlüsse des Linienheizelements sich das Linienheizelement erwärmt und der Zusatzheizbereich dadurch elektrisch heizbar ist.

Das Linienheizelement ist durch direkten Kontakt mit der Heizschicht elektrisch leitend verbunden. Das erfindungsgemäße Linienheizelement ist derart ausgebildet, dass nach Anlegen einer Speisespannung zwischen Abschnitten des Linienheizelements ein Heizstrom durch die Heizschicht im Zusatzheizbereich fließen kann. Dadurch ist der Zusatzheizbereich zusätzlich heizbar. Dies bedeutet, dass aufgrund des Potentialunterschieds zwischen zwei Abschnitten des Linienheizelements und aufgrund des elektrischen Kontakts zwischen Linienheizelement und Heizschicht ein lokaler Heizstrom durch die Zone der Heizschicht zwischen den Abschnitten fließt und die Heizschicht dort lokal zusätzlich erwärmt werden kann.

Durch die synergetische Wechselwirkung aus der Erwärmung des Linienheizelements durch einen Stromanteil der im und entlang des Linienheizelements fließt und dieses erwärmt sowie der Erwärmung der Heizschicht durch einen weiteren Stromanteil, der durch die Heizschicht fließt und diese erwärmt, kann eine besonders hohe Homogenität der Heizleistungsverteilung und damit der Temperaturverteilung im Zusatzheizbereich erzielt werden. Des Weiteren lässt sich durch die Linienführung und der Wahl des ohmschen Widerstands des Linienheizelements eine deutliche Steigerung der Heizleistung und eine gezielte Erhöhung der Heizleistung in gewünschten Zonen des Zusatzheiz-bereichs erzielen.

Das Linienheizelement kann mit derselben Spannungsquelle verbunden werden, mit der auch die Heizschicht des Hauptheizbereichs elektrisch verbunden ist. Erfindungsgemäß ist das Linienheizelement in elektrischer Parallelschaltung zum Heizfeld mit den elektrischen Anschlussmitteln der Heizschicht im Hauptheizbereich elektrisch verbunden. Das Linienheizelement kann zu diesem Zweck beispielsweise die Sammelleiter oder Anschlussleiter, die an die Sammelleiter angeschlossen sind, unmittelbar elektrisch kontaktieren. Das Linienheizelement kann somit durch die Anschlussmittel der Heizschicht des Hauptheizbereichs mit derselben Speisespannung versorgt werden, wie die Heizschicht im Hauptheizbereich selbst. Dies hat den besonderen Vorteil, dass auf separate Außenanschlüsse für den Zusatzheizbereich verzichtet werden kann.

Die elektrische Unterteilung des Hauptheizfeldes und des Zusatzheizfeldes erfolgt bevorzugt durch einen heizschichtfreien Trennbereich. Der Trennbereich wird bevorzugt durch Laserabtragung, Maskierung während der Abscheidung, Schleifen oder anderen Entschichtungsverfahren erzeugt. Laserabtragung ist dabei prozesstechnisch besonders einfach, schnell und dadurch kostengünstig. Des Weiteren wird durch Laserabtragung das Erscheinungsbild der Scheibe nur unwesentlich oder gar nicht beeinträchtigt. Die Breite d der Trennbereiche beträgt von 0,02 mm bis 5 mm und bevorzugt von 0,1 mm bis 0,3 mm. Wenn im Trennbereich ein Verbindungsleiter angeordnet wird, hat der Trennbereich vorteilhafterweise eine Breite von 5 mm bis 30 mm.

Ist die erfindungsgemäße Scheibe als Fahrzeug-Windschutzscheibe ausgeführt, kann es sich bei dem Zusatzheizbereich beispielsweise um den Bereich einer Ruhe- oder Parkstellung von zum Wischen der Scheibe vorgesehenen Scheibenwischern handeln. In diesem Fall ermöglicht die erfindungsgemäße Scheibe in besonders vorteilhafter Weise, dass eine separate Zuleitung zum Linienheizelement am Scheibenunterrand nicht erforderlich ist.

In der erfindungsgemäßen Scheibe kann das Linienheizelement durch vom Linienheizelement verschiedene Verbindungleiter mit den Anschlussmitteln der Heizschicht elektrisch verbunden sein. Diese Maßnahme ermöglicht eine besonders einfache und kostengünstige elektrische Verbindung des Linienheizelements mit den Anschlussmitteln der Heizschicht. Dabei kann es insbesondere in fertigungstechnischer Hinsicht von Vorteil sein, wenn die Verbindungsleiter zumindest teilweise in einer heizschichtfreien Randzone der Scheibe oder in einem heizschichtfreien Trennbereich zwischen dem Hauptheizbereich und dem Zusatzheizbereich der Heizschicht angeordnet sind. Dadurch kann auf eine elektrisch isolierende Ummantelung der Verbindungsleiter verzichtet werden. Die Verbindungsleiter können ihrerseits einen derartigen ohmschen Widerstand aufweisen, dass sie sich bei Anlegen einer Spannung erwärmen und können damit beispielsweise den heizschichtfreien Trennbereich beheizen.

In einer besonders vorteilhaften Ausgestaltung ist erfindungsgemäße Scheibe als Verbundscheibe mit zwei durch eine thermoplastische Klebeschicht miteinander verbundenen Einzelscheiben ausgeführt, wobei sich die Heizschicht auf zumindest einer Oberfläche der Einzelscheiben und/oder auf einer Oberfläche eines zwischen den Einzelscheiben angeordneten Trägers befindet. Es versteht sich, dass die beiden Einzelscheiben nicht zwangsläufig aus Glas bestehen müssen, sondern dass diese auch aus einem nicht-gläsernen Material, beispielsweise Kunststoff, bestehen können.

Bei einer vorteilhaften Ausgestaltung der erfindungsgemäßen Scheibe ist das wenigstens eine Linienheizelement in Form eines beispielsweise metallischen Heizdrahts oder Heizbandes ausgebildet, was eine besonders einfache und kostengünstige technische Realisierung ermöglicht. Vorzugsweise hat der Heizdraht einen Durchmesser im Bereich von 35 bis 150 µm und ist so ausgebildet, dass er einen ohmschen Widerstand im Bereich von 0,1 bis 1 Ohm/m hat, so dass insbesondere bei einer Speisespannung im Bereich von 12 bis 48 Volt eine gewünschte Heizleistung erzielt werden kann. Vorzugsweise ist der Heizdraht dabei so ausgebildet, dass er, insbesondere bei einer Speisespannung im Bereich von 12 bis 48 Volt, eine Heizleistung im Bereich von 400 bis 1000 W/m² Scheibenfläche zur Verfügung stellen kann. Für den Fall, dass der Heizdraht zumindest einen gekrümmten Drahtabschnitt aufweist, ist es bevorzugt, wenn der gekrümmte Drahtabschnitt einen Krümmungsradius von mehr als 4 mm aufweist, so dass die praktische Handhabbarkeit beim Verlegen verbessert und die Bruchgefahr verringert ist.

In einer alternativen vorteilhaften Ausgestaltung der erfindungsgemäßen Scheibe ist das wenigstens eine Linienheizelement in Form einer Heizlinie aus einer aufgedruckten leitfähigen Paste ausgebildet. Die leitfähige Paste enthält beispielsweise Silberpartikel und Glasfritten und kann beispielsweise durch Siebdruck auf die Scheibenoberfläche aufgetragen werden. Anschließend wird die leitfähige Paste erhitzt und eingebrannt und dadurch fixiert. Vorteilhafterweise werden die Verbindungsleiter in gleicher Weise gebildet. Die spezifische Leitfähigkeit der Siebdruckpaste beträgt bevorzugt von 5*10⁶ S/m bis 100*10⁶ S/m und besonders bevorzugt von 20*10⁶ S/m bis 50*10⁶ S/m.

Die Heizlinie hat bevorzugt eine Dicke von 4 µm bis 20 µm und besonders bevorzugt von 6 µm bis 14 µm. Die Heizlinie hat bevorzugt eine Breite von 0,5 mm bis 4 mm und besonders bevorzugt von 1 mm bis 2,5 mm. Die Heizlinie hat bevorzugt eine Länge von 1000 mm bis 10000 mm und besonders bevorzugt von 2000 mm bis 70000 mm. Die Heizlinie hat bevorzugt einen ohmschen Widerstand von 0,2 Ohm/m bis 8 Ohm/m und besonders bevorzugt von 0,5 Ohm/m bis 4 Ohm/m, so dass insbesondere bei einer Speisespannung im Bereich von 12 bis 48 Volt eine gewünschte Heizleistung erzielt werden kann. Vorzugsweise ist der Heizlinie dabei so ausgebildet, dass sie, insbesondere bei einer Speisespannung im Bereich von 12 bis 48 Volt, eine gewünschte Heizleistung im Bereich von 400 bis 1000 W/m² Scheibenfläche zur Verfügung stellen kann.

Ein erfindungsgemäßes Linienheizelement aus einer gedruckten Heizlinie hat den besonderen Vorteil, dass es mit aufgedruckten Sammelleitern und gegebenenfalls mit aufgedruckten Verbindungsleitern in einem Fertigungsschritt, beispielsweise über ein Siebdruckverfahren, aufgebracht werden kann. Dies ist besonders kostengünstig und fertigungstechnisch besonders einfach zu realisieren.

Das erfindungsgemäße Linienheizelement ist mit einem mäanderförmigen, bevorzugt mit einem sinusförmigen, dreiecksförmigen, trapezförmigen Verlauf ausgebildet. Durch den Periodenabstand und die Amplitude des Verlaufs, lässt sich der Potentialunterschied zwischen benachbarten Abschnitten des Linienheizelements einstellen und unterschiedliche Heizleistungsverteilungen erzielen. Es versteht sich, dass verschiedene Verlaufsformen, Periodenabstände, Amplituden, Dicken, Breiten und spezifische Widerstände der Heizlinie oder des Heizdrahtes innerhalb verschiedener Abschnitte des Linienheizelements variieren können um dadurch eine optimale Homogenität in Heizleistungsverteilung und Temperaturverteilung zu erzielen. Dies ist besonders vorteilhaft, wenn der Zusatzheizbereich der Heizschicht gewunden oder gebogen verläuft und keine Konstante Breite aufweist oder wenn Zonen nicht durch das Linienheizelement bedeckt oder gekreuzt werden dürfen, beispielsweise wenn in Einbaulage unterhalb der Scheibe die Fahrzeug-Identifikationsnummer angeordnet werden soll.

Erfindungsgemäße Linienheizelemente weisen nicht reckteckförmige Verläufe auf. Bei rechteckförmigen Verläufen findet im Bereich der Abschnitte der Linienheizelemente, die parallel zu der Stromflussrichtung durch die Heizschicht angeordnet sind, ein Potentialabfall statt, was zu einer lokalen Erniedrigung des Heizstroms durch die Heizschicht und damit zu einer lokalen Erniedrigung der Heizstromdichte in der unmittelbaren Umgebung dieser parallelen Abschnitte führt. Die lokale Erniedrigung führt wiederum zu einer unerwünschten Inhomogenität in der Heizleistungsverteilung.

In einer weiteren vorteilhaften Ausgestaltung der Erfindung hat das Linienheizelement einen periodischen Verlauf, wobei innerhalb einer Periode die Abschnitte des Linienheizelements nicht parallel und nicht antiparallel zueinander angeordnet sind. Besonders bevorzugt sind innerhalb einer Periode alle Abschnitte, die nicht parallel zur Stromflussrichtung durch die Heizschicht angeordnet sind, nicht parallel und nicht antiparallel zueinander angeordnet. Dadurch kann eine besonders vorteilhafte Homogenisierung der Heizleistungsverteilung durch den durch die Heizschicht fließenden Strom innerhalb der Heizschicht erzielt werden.

In einer weiteren vorteilhaften Ausgestaltung der Erfindung ist das Linienheizelement trapezförmig ausgebildet. Besonders bevorzugt ist es, wenn die Summe der Grundseiten des trapezförmigen Verlaufs kleiner oder gleich der Hälfte des Periodenabstands des trapezförmigen Verlaufs beträgt. Der Periodenabstand ist die Länge des Verlaufs, über die sich eine der periodischen Strukturen erstreckt. Dadurch kann eine besonders vorteilhafte Homogenisierung der Heizleistungsverteilung durch den durch die Heizschicht fließenden Strom innerhalb der Heizschicht erzielt werden.

In einer weiteren vorteilhaften Ausgestaltung der Erfindung hat das Linienheizelement einen periodischen Verlauf, wobei der Abstand zwischen einem Abschnitt des Linienheizelements vor dem Umkehrpunkt (oder dem Umkehrbereich), das heißt dem Amplitudenmaximum oder Amplitudenminimum zu einem Abschnitt des Linienheizelements nach dem Umkehrpunkt (oder dem Umkehrbereich) in Verlaufsrichtung kontinuierlich abnimmt. Der Abschnitt des Linienheizelements vor dem Umkehrpunkt (oder dem Umkehrbereich) geht dabei entweder unmittelbar in den Abschnitt nach dem Umkehrpunkt über oder es befindet sich ein weiterer Abschnitt im Umkehrbereich (beispielsweise eine zur Stromrichtung durch die Heizschicht paralleler Abschnitt, beispielsweise die Grundseite bei einem trapezförmigen Verlauf) zwischen den beiden Abschnitten. Durch die elektrische Leitfähigkeit des Linienheizelements findet im Bereich der Umkehrpunkte (oder Umkehrbereiche) ein Spannungsabfall zwischen entsprechenden Abschnitten des Linienheizelements statt. Da der Weg des Stromflusses aber durch den verringerten Abstand zwischen den Abschnitten verkürzt wird, wird der Spannungsabfall kompensiert und im Vergleich zu von den Umkehrpunkten weiter entfernten Bereichen wird näherungsweise die gleich Heizleistungsdichte erzielt. Dies ist besonders Vorteilhaft um eine hohe Homogenität in der Heizleistungsverteilung der Heizschicht zu erzielen. Die Erfindung erstreckt sich weiterhin auf ein Verfahren zur Herstellung einer transparenten Scheibe, wobei zumindest:
a) eine elektrische Heizschicht auf zumindest einem Teil der Scheibenfläche (III) abgeschieden wird,
b) die elektrische Heizschicht in einen Hauptheizbereich und einen davon elektrisch isolierten Zusatzheizbereich unterteilt wird, bevorzugt durch Laserabtragung,
c) mindestens ein erster Sammelleiter und ein zweiter Sammelleiter auf die Heizschicht im Hauptheizbereich aufgebracht werden, wobei die Sammelleiter in direktem Kontakt elektrisch leitend mit der Heizschicht verbunden werden, so dass nach Anlegen einer Speisespannung aus einer Spannungsquelle an mit den Sammelleiter verbind-baren Anschlussleitern ein Heizstrom über ein von der Heizschicht gebildetes Heizfeld fließt,
d) mindestens ein elektrisches Linienheizelement auf die Heizschicht im Zusatzheizbereich aufgebracht wird, wobei
   - das Linienheizelement in direktem Kontakt elektrisch leitend mit der Heizschicht verbunden wird,
   - das Linienheizelement in elektrischer Parallelschaltung zum Heizfeld mit den Anschlussleitern oder mit den Sammelleitern der Heizschicht im Hauptheizbereich elektrisch verbunden wird,
   - das Linienheizelement einen solchen ohmschen Widerstand hat, dass nach Anlegen der Speisespannung der Zusatzheizbereich beheizt werden kann und
   - das Linienheizelement derart ausgebildet wird, dass nach Anlegen einer Speisespannung zwischen Abschnitten des Linienheizelements ein Heizstrom durch die Heizschicht im Zusatzheizbereich fließen kann und der Zusatzheizbereich dadurch zusätzlich beheizt werden kann,
e) Verbindungsleiter auf die Scheibenfläche (III) aufgebracht werden, durch die das Linienheizelement mit den Sammelleitern verbunden wird oder mit Anschlussleitern verbunden werden kann wobei das Linienheizelement mäanderförmig und nicht rechteckförmig und bevorzugt sinusförmig oder dreiecksförmig ausgebildet ist,
f) die Anschlussleiter auf die Scheibenoberfläche (III) aufgebracht werden und mit den Sammelleitern, dem Linienheizelement und/oder den Verbindungsleitern in direktem Kontakt elektrisch verbunden werden.

In einer vorteilhaften Ausführungsform des erfindungsgemäßen Verfahrens werden die Sammelleiter, das Linienheizelement und die Verbindungsleiter durch Siebdruck auf die Scheibenoberfläche (III) aufgebracht werden. Dabei ist es besonders vorteilhaft, wenn die Verfahrensschritte c), d) und e) gleichzeitig in einem Verfahrensschritt durchgeführt werden. Dies ist besonders kostengünstig und fertigungstechnisch besonders einfach zu realisieren.

Des Weiteren erstreckt sich die Erfindung auf die Verwendung einer wie oben beschriebenen transparenten Scheibe als funktionales und/oder dekoratives Einzelstück und als Einbauteil in Möbeln, Geräten und Gebäuden, sowie in Fortbewegungsmitteln zur Fortbewegung auf dem Lande, in der Luft oder zu Wasser, insbesondere in Kraftfahrzeugen beispielsweise als Windschutzscheibe, Heckscheibe, Seitenscheibe und/oder Glasdach. In einer besonders vorteilhaften erfindungsgemäßen Verwendung der transparenten Scheibe als Windschutzscheibe oder Heckscheibe, ist der Zusatzheizbereich in der Ruhe- oder Parkstellungszone von zum Wischen der Scheibe vorgesehenen Scheibenwischern angeordnet. Dies hat den besonderen Vorteil, dass die Ruhe- oder Parkstellungszone besonders schnell und effizient enteist werden kann.

Die Erfindung wird nun anhand von Ausführungsbeispielen näher erläutert, wobei Bezug auf die beigefügten Figuren genommen wird. Es zeigen in vereinfachter, nicht maßstäblicher Darstellung:
- Figur 1A: eine schematische Draufsicht eines Ausgestaltungsbeispiels einer erfindungsgemäßen Scheibe;
- Figur 1B: eine Querschnittsdarstellung entlang der Schnittlinie A-A' der erfindungsgemäßen Scheibe aus Figur 1A;
- Figur 1C: eine vergrößerte Darstellung des Ausschnitts B der erfindungsgemäßen Scheibe aus Figur 1A;
- Figur 1D: eine vergrößerte Darstellung eines alternativen Ausgestaltungsbeispiels eines erfindungsgemäßen Linienheizelements;
- Figur 1E: eine vergrößerte Darstellung eines alternativen Ausgestaltungsbeispiels eines Linienheizelements;
- Figur 2: eine schematische Draufsicht eines alternativen Ausgestaltungsbeispiels einer erfindungsgemäßen Scheibe;
- Figur 3A: eine schematische Draufsicht eines alternativen Ausgestaltungsbeispiels einer erfindungsgemäßen Scheibe;
- Figur 3B: eine Querschnittsdarstellung entlang der Schnittlinie A-A' der erfindungsgemäßen Scheibe aus Figur 3A;
- Figur 3C: eine vergrößerte Darstellung des Ausschnitts C eines alternativen Ausgestaltungsbeispiels der erfindungsgemäßen Scheibe aus Figur 3A;
- Figur 3D: eine Querschnittsdarstellung entlang der Schnittlinie A-A' eines alternatives Ausführungsbeispiel der erfindungsgemäßen Scheibe aus Figur 3A;
- Figur 4: schematische Darstellung des erfindungsgemäßen Verfahrens;
- Figur 5A: Isolinien-Diagramm einer Simulation der Heizleistungsverteilung in einer Heizschicht des Zusatzheizbereichs mit rechteckigem Verlauf des Linienheizelements;
- Figur 5B: Graustufen-Diagramm der Simulation nach Figur 5A;
- Figur 6A: Isolinien-Diagramm einer Simulation der Heizleistungsverteilung in einer Heizschicht des Zusatzheizbereichs mit dreiecksförmigem Verlauf des Linienheizelements;
- Figur 6B: Graustufen-Diagramm der Simulation nach Figur 6A.

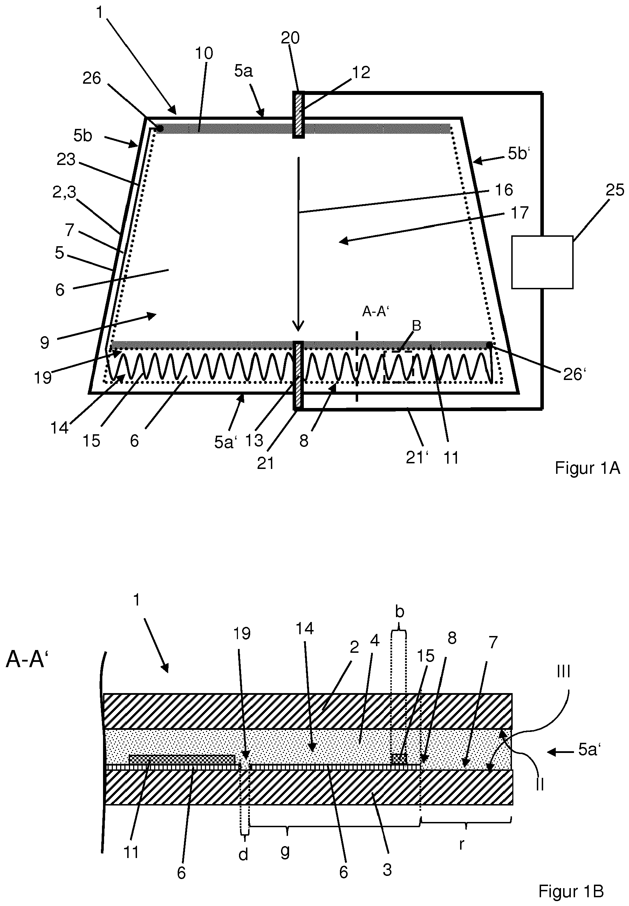

Figur 1A zeigt eine erfindungsgemäße Scheibe am Beispiel einer insgesamt mit der Bezugszahl 1 bezeichneten Fahrzeug-Windschutzscheibe. Die Windschutzscheibe 1 ist als Verbundscheibe ausgebildet.

Figur 1B zeigt eine Querschnittsdarstellung entlang der Schnittlinie A-A' aus Figur 1A. Die Windschutzscheibe 1 umfasst eine starre Außenscheibe 2 und eine starre Innenscheibe 3, die beide als Einzelscheiben ausgebildet und über eine thermoplastische Klebeschicht 4, hier beispielsweise eine Polyvinylbutyralfolie (PVB), Ethylen-VinylAcetat-Folie (EVA) oder Polyurethanfolie (PU), miteinander verbunden sind. Dem Fachmann ist der grundsätzliche Aufbau einer solchen Verbundscheibe beispielsweise aus der industriellen Serienfertigung von Kraftfahrzeugen wohlbekannt, so dass hier nicht näher darauf eingegangen werden muss. Die beiden Einzelscheiben 2, 3 sind annähernd von gleicher Größe, haben in etwa eine trapezförmig geschwungene Kontur und sind beispielsweise aus Glas gefertigt, wobei sie gleichermaßen aus einem nicht-gläsernen Material wie Kunststoff hergestellt sein können. Für eine andere Anwendung wie als Windschutzscheibe ist es auch möglich, die beiden Einzelscheiben 2, 3 aus einem flexiblen Material herzustellen.

Die Kontur der Windschutzscheibe 1 ist durch einen Scheibenrand 5 definiert, der sich entsprechend der trapezartigen Form aus zwei langen Scheibenrändern 5a, 5a' (in Einbaulage oben und unten) und zwei kurzen Scheibenränder 5b, 5b' (in Einbaulage links und rechts) zusammensetzt. Auf der mit der Klebeschicht 4 verbundenen Seite der Innenscheibe 3 ("Seite III") ist eine transparente, für eine elektrische Beheizung der Windschutzscheibe 1 dienende Heizschicht 6 abgeschieden. Die Heizschicht 6 ist im Wesentlichen vollflächig auf die Innenscheibe 3 aufgebracht, wobei ein allseitig umlaufender Randstreifen 7 der Innenscheibe 3 nicht beschichtet ist, so dass ein Heizschichtrand 8 gegenüber dem Scheibenrand 5 um eine Breite r nach innen rückversetzt ist. Die Breite r beträgt beispielsweise 10 mm. Diese Maßnahme dient einer elektrischen Isolierung der Heizschicht 6 nach außen. Zudem wird die Heizschicht 6 gegen vom Scheibenrand 5 vordringende Feuchtigkeit geschützt, die ansonsten zur Korrosion der Heizschicht 6 führen kann.

In an sich bekannter Weise umfasst die Heizschicht 6 eine Schichtenfolge mit mindestens einer elektrisch leitfähigen metallischen Teilschicht, vorzugsweise Silber, und gegebenenfalls weiteren Teilschichten wie Entspiegelungs- und Blockerschichten. Vorteilhaft ist die Schichtenfolge thermisch hoch belastbar, so dass sie die zum Biegen von Glasscheiben erforderlichen hohen Temperaturen von typischer Weise mehr als 600°C ohne Schädigung übersteht, wobei aber auch thermisch gering belastbare Schichtenfolgen vorgesehen sein können. Anstatt direkt auf die Innenscheibe 3 aufgebracht zu sein, könnte sie beispielsweise auch auf eine Kunststofffolie aufgebracht werden, die anschließend mit Außen- und Innenscheibe 2, 3 verklebt wird. Die Heizschicht 6 wird beispielsweise durch Sputtern (Magnetron-Kathodenzerstäubung) aufgebracht. Der Flächenwiderstand der Heizschicht 6 liegt beispielsweise im Bereich von 0,1 bis 6 Ohm/Flächeneinheit.

Die Heizschicht 6 ist mit einem ersten Sammelleiter 10 und einem zweiten Sammelleiter 11 in direktem Kontakt elektrisch leitend verbunden. Die beiden Sammelleiter 10, 11 sind jeweils band- bzw. streifenförmig ausgebildet und dienen als Anschlusselektroden zum breiten Einleiten eines Speisestroms in die Heizschicht 6. Dazu sind die Sammelleiter 10,11 beispielsweise über deren volle Bandlänge auf der Heizschicht 6 angeordnet, wobei sich der erste Sammelleiter 10 entlang des oberen langen Scheibenrands 5a und der zweite Sammelleiter 11 in etwa entlang des unteren langen Scheibenrands 5a' erstreckt. Die beiden Sammelleiter 10, 11 bestehen beispielweise aus einem gleichen Material und können beispielsweise durch Aufdrucken einer Paste auf die Heizschicht 6 beispielsweise im Siebdruckverfahren hergestellt werden. Alternativ wäre es aber auch möglich, die Sammelleiter 10, 11 aus schmalen Metallfolienstreifen beispielsweise aus Kupfer oder Aluminium herzustellen. Diese können beispielsweise auf der Klebeschicht 4 fixiert und beim Verbinden von Außen- und Innenscheibe 2, 3 auf der Heizschicht 6 angeordnet werden. Dabei kann durch die Einwirkung von Wärme und Druck beim Verbinden der Einzelscheiben ein elektrischer Kontakt gewährleistet werden.

An den ersten Sammelleiter 10 ist ein erster Anschlussleiter 12 elektrisch angeschlossen, der hier beispielsweise als Flachbandleiter (z. B. schmale Metallfolie) ausgebildet ist. Der Anschlussleiter 12 verfügt beispielsweise über einen ersten Außenanschluss 20, der zur Verbindung mit den einen Pol (beispielsweise Minuspol) einer Spannungsquelle 25 zum Bereitstellen einer Speisespannung vorgesehen ist. Der erste Anschlussleiter 12 ist in etwa mittig des oberen langen Scheibenrands 5a angeordnet. An den zweiten Sammelleiter 11 ein zweiter Anschlussleiter 13 elektrisch angeschlossen, der hier ebenfalls beispielsweise als Flachbandleiter (z. B. schmale Metallfolien) ausgebildet ist und über einen zweiten Außenanschluss 21' verfügt, der zur Verbindung mit dem anderen Pol (beispielsweise Pluspol) der Spannungsquelle 25 vorgesehen ist. Die Anschlussleiter 12,13 sind beispielsweise mit einer Kunststoffisolationshülle, bevorzugt aus Polyimid, versehen und dadurch elektrisch isoliert um einen Kurzschluss mit anderen elektrisch leitfähigen und/oder spannungsführenden Strukturen in der Scheibe 1 zu vermeiden.

Durch die beiden Sammelleiter 10, 11 wird ein Heizfeld 17 eingeschlossen, in dem bei Anlegen einer Speisespannung ein Heizstrom 16 fließt. Aufgrund eines im Vergleich zur Heizschicht 6 vernachlässigbaren ohmschen Widerstands heizen sich die Sammelleiter 10, 11 dabei nur wenig auf und leisten keinen nennenswerten Beitrag zur Heizleistung. Es versteht sich, dass der ohmsche Widerstand der Sammelleiter 10,11 auch so gewählt werden kann, dass eine gezielte Beheizung von Scheibenbereichen durch die Sammelleiter 10,11 ermöglicht wird.

Wie eingangs bereits erläutert wurde, nimmt der Anschlusswiderstand der Heizschicht 6 mit der Länge der Strompfade des Heizstroms 16 zu, so dass es im Hinblick auf eine zufriedenstellende Heizleistung vorteilhaft ist, wenn die beiden Sammelleiter 10, 11 einen möglichst geringen Abstand voneinander haben. Aus diesem Grund bietet es sich an, einen unteren Scheibenbereich, der nicht mehr zum Sichtfeld gehört, jedoch dem Bereich einer Ruhe- oder Parkstellung von zum Wischen der Scheibe vorgesehenen Scheibenwischern entspricht, als Zusatzheizbereich 14 auszubilden, der von dem Hauptheizbereich 9 elektrisch isoliert ist. Gleichwohl befindet sich im Zusatzheizbereich 14 die Heizschicht 6, welche sich allerdings nicht zwischen den beiden Sammelleitern 10, 11 befindet, nicht vom Heizstrom 16 durchströmt werden kann und somit durch die Sammelleiter 10,11 nicht beheizbar ist.

Um elektrische Kurzschlüsse zu verhindern ist der Hauptheizbereich 9 der Heizschicht 6 von dem Zusatzheizbereich 14 elektrisch und insbesondere galvanisch isoliert, beispielsweise durch einen heizschichtfreien Trennbereich 19 einer Breite d von beispielsweise 100 µm. Im Trennbereich 19 ist die Heizschicht 6 beispielsweise durch Laserabtragung entfernt worden. Alternativ kann die Heizschicht 6 auch mechanisch abgetragen werden oder bereits bei der Beschichtung durch Abschattung ausgenommen bleiben.

Um den Zusatzheizbereich 14 zu heizen, weist dieser über ein elektrisch beheizbares Linienheizelement 15 auf. Das Linienheizelement 15 ist beispielsweise durch eine sinusförmig geschwungene linienförmige elektrisch leitende Struktur, im Folgenden Heizlinie genannt, gebildet. Die Heizlinie hat bevorzugt eine Periodizität von 30 bis 60 und beispielsweise 50 und eine Amplitude von 20 mm bis 70 mm und beispielsweise 60 mm und erstreckt sich entlang der unteren Scheibenkante 5a' über die gesamte längere Breite der Scheibe 1 hinweg. Die Heizlinie besteht beispielsweise aus einer aufgedruckten elektrisch leitfähigen Paste und wird bevorzugt zeitgleich mit den Sammelleitern 10,11 in einem Siebdruckverfahren auf die Innenscheibe 3 aufgedruckt. Die Heizlinie wird dabei direkt auf die Heizbeschichtung 6 aufgedruckt und dadurch mit dieser auf ihrer vollen Länge direkt kontaktiert und damit elektrisch leitend verbunden. Die Breite b der Heizlinie beträgt bevorzugt zwischen 0,5 mm und 4 mm und hier beispielsweise 1 mm. Die Dicke der Heizlinie beträgt beispielsweise 10 µm und der spezifische Widerstand 2,3*10⁻⁸ Ohm*m der Linienlänge. Es versteht sich, dass das Linienheizelement 15 auch durch eine andere elektrisch leitfähige Struktur, beispielsweise einem Heizdraht wie einen Wolframdraht, gebildet werden kann.

Das Linienheizelement 15 ist in diesem Beispiel mit einem Anschluss direkt mit dem zweiten Sammelleiter 11 an dessen äußerem Ende über eine elektrische Leitungsverbindung 26' verbunden. Im einfachsten Falle geht die gedruckte Heizlinie dort kontinuierlich in den gedruckten Sammelleiter 11 über. Der andere Anschluss des Linienheizelements 15 ist in diesem Beispiel über einen Verbindungsleiter 23 mit dem ersten Sammelleiter 10 verbunden. Der Verbindungsleiter 23 ist beispielsweise ein aufgedruckter Leiter, der entlang des heizschichtfreien Randstreifens 7 entlang der Scheibenkante 5b verläuft. Der Verbindungsleiter 23 kann dieselben Abmessungen aufweisen wie die Heizlinie im Zusatzheizbereich 14 und die Scheibe 1 im Randbereich bei Anliegen einer Speisespannung beheizen. Üblicherweise ist der Verbindungsleiter 23 niederohmiger ausgebildet, so dass dort kein nennenswerter Spannungsabfall stattfindet und keine Erwärmung erfolgt. Durch die oben beschriebene Verschaltung ist das Linienheizelement 15 in elektrischer Parallelschaltung zum Heizfeld 17 mit den Anschlussmitteln 10, 11, 12, 13, der Heizschicht 6 elektrisch verbunden und somit ist kein weiterer Anschluss für das Linienheizelement 15 im Zusatzheizbereich 14 notwendig.

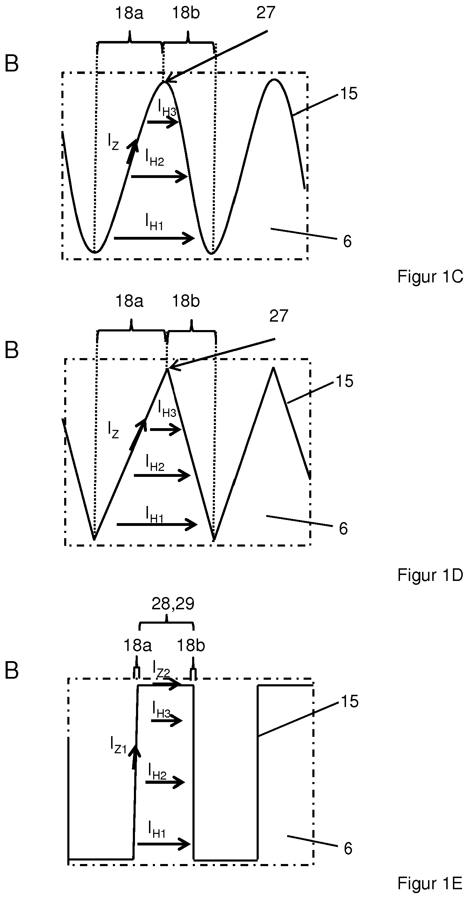

Figur 1C zeigt einen vergrößerten Ausschnitt B des Zusatzheizbereichs 14 des Ausgestaltungsbeispiels einer erfindungsgemäßen Scheibe 1 aus Figur 1A. Die sinusförmig verlaufende Heizlinie lässt sich jeweils in zwei unmittelbar benachbarte Abschnitte 18a und 18b der Heizlinie unterteilen.

Bei Anlegen einer Speisespannung fließt ein Heizstrom 16 zwischen den Sammelleitern 10,11 durch das Heizfeld 17. Wegen der elektrischen Parallelschaltung des Linienheizelements 15 zu den Sammelleitern 10,11 des Heizfelds 17 fließt ebenso ein Strom durch das Linienheizelement 15. Da das Linienheizelement 15 in direktem elektrischen Kontakt mit der Heizschicht 6 im Zusatzheizbereich 14 ist, teilt sich der Stromfluss auf: Ein Teil des Stroms I_{z} fließt durch das Linienheizelement 15 selbst, das heißt hier entlang der aufgedruckten elektrisch leitfähigen Heizlinie, beispielsweise im Abschnitt 18a. Aufgrund des Potentialunterschieds fließt zusätzlich ein Strom I_{H1-3} durch einen Bereich der Heizschicht 6, die sich jeweils zwischen zwei benachbarten Abschnitten 18a,18b des Linienheizelements 15 befindet. Die Stromdichte hängt dabei vom Potentialunterschied zwischen den Abschnitten 18a und 18b ab und wird durch die Form der Heizlinie, dem spezifischen Widerstand der Heizlinie und dem spezifischen Widerstand der Heizschicht 6 bestimmt und lässt sich im Rahmen einfacher Simulationen optimieren. Beide Stromanteile führen zu einem Heizstrom und damit zu einer Erwärmung der Scheibe 1 in den jeweiligen Bereich. Durch die Kombination aus beiden Stromanteilen I_{Z}, I_{H1-3} kann im Zusatzheizbereich 14 eine höhere Homogenität der Heizleistungsverteilung und eine höhere Homogenität der daraus resultierenden Temperaturverteilung erreicht werden, als dies beispielsweise durch eine Heizlinie ohne zusätzlicher Heizschicht der Fall wäre. Dies war für den Fachmann unerwartet und überraschend.

Die höhere Homogenität der Heizleistungsverteilung und die höhere Homogenität der Temperaturverteilung sind hier besonders vorteilhaft, wenn der Zusatzheizbereich 14 wie in diesem Beispiels dargestellt, im Bereich der Park- und Ruheposition von Scheibenwischern angeordnet ist und diese schnell und zuverlässig enteist werden können.

Figur 1D zeigt eine vergrößerte Darstellung eines alternativen Ausgestaltungsbeispiels eines erfindungsgemäßen Linienheizelements 15. Die Heizlinie weist hier einen dreiecksförmigen Verlauf auf. Auch hier findet eine Aufteilung des Stromflusses in einen Anteil I_{Z} entlang der Heizlinie und einen Anteil I_{H1-3} durch die Heizschicht 6 statt, was zu einer Homogenisierung der Heizleistungsverteilung im Zusatzheizbereich 14 der Heizschicht 6 führt.

Figur 1E zeigt eine vergrößerte Darstellung eines weiteren alternativen Ausgestaltungsbeispiels eines Linieneizelements 15. Die Heizlinie weist hier einen rechteckförmigen Verlauf auf. Auch hier findet eine Aufteilung des Stromflusses in einen Anteil I_{Z} entlang der Heizlinie und einen Anteil I_{H1-3} durch die Heizschicht 6 statt, was zu einer Homogenisierung der Heizleistungsverteilung im Zusatzheizbereich 14 der Heizschicht 6 führt im Vergleich mit einem Linienheizelement 15, das nicht auf einer Heizschicht 6 angeordnet ist. Dennoch zeigen rechteckförmig verlaufende Linienheizelemente 15, die auf einer Heizschicht 6 angeordnet sind, eine geringere Homogenität als nicht-rechteckförmig verlaufende Linienheizelemente 15.

Es versteht sich, dass die Periodizität, die Breite b und Dicke der Heizlinie und deren Formverlauf sich über die Scheibe 1 hinweg ändern können und so gezielt bestimmte Bereich verstärkt heizbar sind.

Die Heizlinie enthält vorzugsweise, jedoch nicht zwingend, ein metallisches Material, insbesondere Silber und Glasfritten. Die Heizlinie hat beispielsweise einen Ohm'schen Widerstand im Bereich von 0,2 Ohm bis 8 Ohm/m, der bei der üblichen Bordspannung eines Kraftfahrzeugs von 12 bis 48 Volt eine für die praktische Anwendung geeignete Heizleistung hat. Vorzugsweise kann eine Heizleistung im Bereich von 400 bis 1000 W/m² Scheibenfläche im Zusatzheizbereich 14 zur Verfügung gestellt werden.

Der Hauptheizbereich 9 und der Zusatzheizbereich 14 der Heizschicht 6 können weitere heizschichtfreie Bereiche aufweisen, beispielsweise zur Ausbildung eines oder mehrerer Kommunikationsfenster. Alternativ kann das Linienheizelement 15 im Zusatzheizbereich 14 auch so geführt sein, dass es einen oder mehrere Abschnitte ohne gedruckte Heizlinie aufweist, beispielsweise um die ungestörte Durchsicht auf eine Fahrzeug-Identifikationsnummer unterhalb der Scheibe 1 zu gewährleisten.

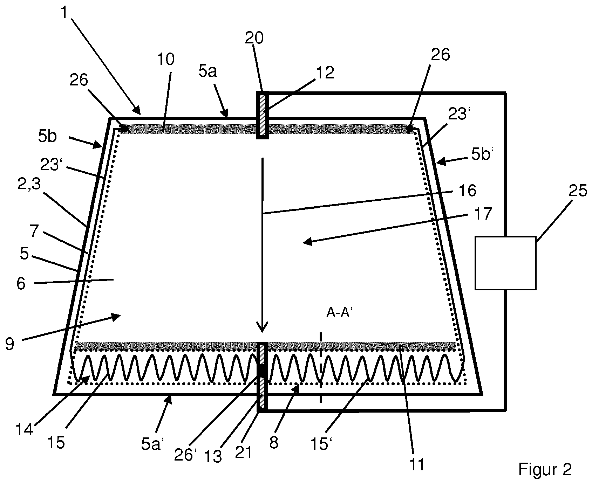

Figur 2 zeigt eine schematische Draufsicht auf ein alternatives Ausgestaltungsbeispiel einer erfindungsgemäßen Scheibe 1. Um unnötige Wiederholungen zu vermeiden, werden lediglich die Unterschiede zum Ausführungsbeispiel von Figur 1 erläutert und ansonsten auf die dort gemachten Ausführungen Bezug genommen. Demnach verfügt die Windschutzscheibe 1 über ein Heizfeld 17, wie es bereits in Figur 1A dargestellt wurde.

Im Zusatzheizbereich 14 sind zwei Linienheizelemente 15,15' angeordnet. Beide Linienheizelemente 15,15' bestehen aus Heizlinien, die in ihren Abmessungen, denen aus Figur 1A entsprechen. Jedoch sind beide Linienheizelemente 15,15' etwa in der Scheibenmitte mit dem zweiten Anschlussleiter 13 des unteren zweiten Sammelleiters 11 in der elektrischen Leitungsverbindung 26' elektrisch leitend verbunden. Der Anschlussleiter 13 kann hier beispielweise als nicht-isolierter Flachbandleiter (z. B. schmale Metallfolien) ausgebildet sein. Die jeweils äußeren Anschlüsse der Linienheizelemente 15,15' sind über zwei Verbindungsleiter 23,23', die jeweils im heizschichtfreien Randstreifen 7 parallel zu den Scheibenrändern 5b und 5b' verlaufen, mit den jeweiligen Ende des ersten Sammelleiters 10 am oberen Scheibenrand 5a der Scheibe 1 elektrisch leitend verbunden. Auf diese Weise lässt sich die Speisespannung in zwei Linienheizelemente 15,15' einspeisen, die jeweils nur eine Hälfte des Zusatzheizbereichs 14 erwärmen. Damit lässt sich eine deutlich höhere Heizleistung erzielen als im Falle von Figur 1A.

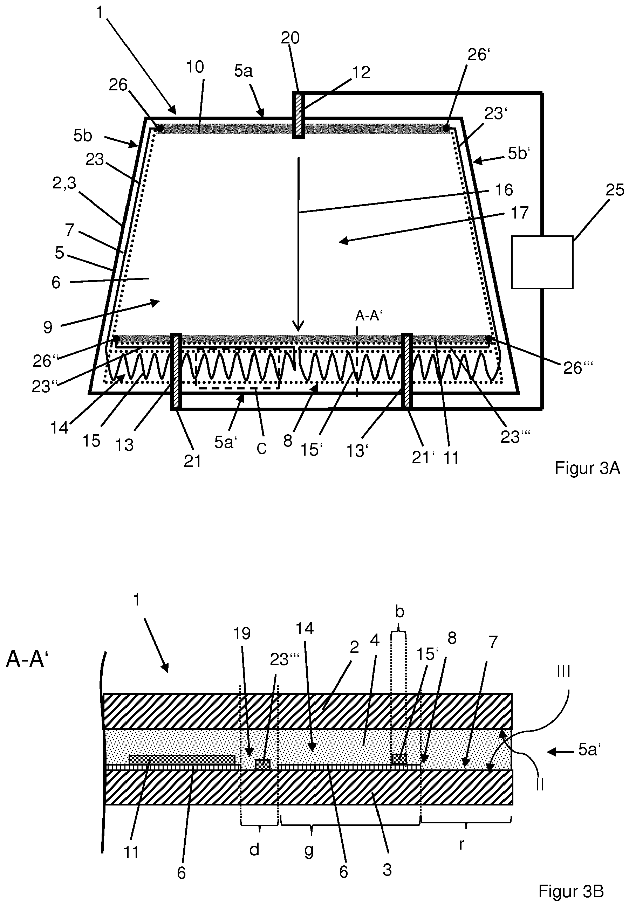

Figur 3A zeigt eine schematische Draufsicht auf ein weiteres alternatives Ausgestaltungsbeispiel einer erfindungsgemäßen Scheibe 1.

Figur 3B zeigt eine Querschnittsdarstellung entlang der Schnittlinie A-A' der erfindungsgemäßen Scheibe aus Figur 3A. Um unnötige Wiederholungen zu vermeiden, werden lediglich die Unterschiede zum Ausführungsbeispiel von Figur 1A und 1B erläutert und ansonsten auf die dort gemachten Ausführungen Bezug genommen.

In diesem Ausgestaltungsbeispiel sind an dem zweiten Sammelleiter 11 zwei zweite Anschlussleiter 13, 13' elektrisch angeschlossen, die hier ebenfalls beispielsweise als isolierte Flachbandleiter (z. B. schmale Metallfolien) ausgebildet sind und jeweils über zwei zweiten Außenanschlüsse 21, 21' verfügen, die zur Verbindung mit dem anderen Pol (beispielsweise Pluspol) der Spannungsquelle 25 vorgesehen sind.

Im Zusatzheizbereich 14 sind wie in Figur 2 zwei Linienheizelemente 15,15' angeordnet, die an ihren äußeren Anschlüssen über Verbindungsleiter 23,23' mit dem ersten Sammelleitern 10 verbunden sind. Die beiden Anschlüsse der Linienheizelemente 15,15', die in der Scheibenmitte angeordnet sind, sind hier über weitere Verbindungsleiter 23",23'" mit den äußeren Ende des zweiten Sammelleitern 11 über die elektrischen Leitungsverbindungen 26" und 26'" kontaktiert. Dazu ist der Trennbereich 19 mit einer Breite d von 3 mm ausgebildet. Die Verbindungsleiter 23" und 23'" sind innerhalb des Trennbereichs 19 angeordnet und beispielsweise mittels Siebdruck unmittelbar auf die Seite III der Innenscheibe 3 aufgedruckt.

Die Verbindungsleiter 23", 23'" im Trennbereich 19 wurden so dimensioniert, dass die Verbindungsleiter 23",23'" durch Anlegen einer Speisespannung an die äußeren Anschlüsse 20, 21, 21' der Scheibe 1 heizbar sind. Dies hat den besonderen Vorteil, dass dadurch der Trennbereich 19 gezielt erwärmt und enteist werden kann.

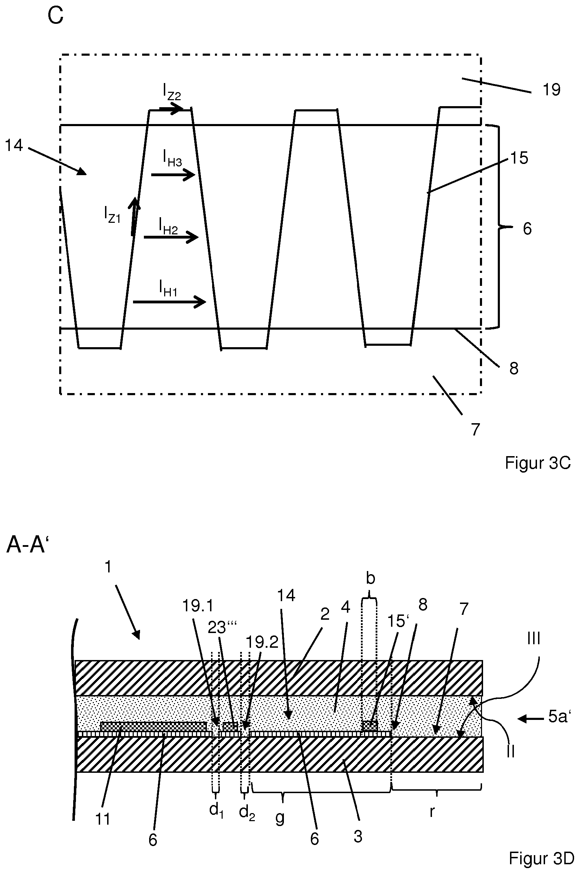

Figur 3C zeigt ein alternatives erfindungsgemäßes Ausführungsbeispiel in einem vergrößerten Ausschnitt C aus Figur 3A. Im Unterschied zu Figur 3A weist das Linienheizelement 15 hier einen trapezförmigen Verlauf auf. Auch hier findet eine Aufteilung des Stromflusses in einen Anteil I_{Z} entlang der Heizlinie und einen Anteil I_{H1-3} durch die Heizschicht 6 statt. Das Linienheizelement 15 liegt hier abschnittsweise außerhalb der Heizschicht 6 des Zusatzheizbereichs 14. Die Grundseiten, also die parallel verlaufenden Seiten des trapezförmigen Verlaufs, sind dabei außerhalb des Zusatzheizbereichs 14 angeordnet. Das heißt die oberen Grundseiten sind oberhalb des Zusatzheizbereichs 14 im heizschichtfreien Trennbereich 19 angeordnet. Die unteren Grundseiten sind unterhalb des Zusatzheizbereichs 14 im heizschichtfreien im Randbereich 7 angeordnet.

Durch diese Maßnahme werden lokale Temperaturerhöhungen (sogenannte Hotspots) im oberen und unteren Bereich des hier trapezförmigen Verlaufs reduziert, was zu einer weiteren Verbesserung der Heizleistungsverteilung führt. Es versteht sich, dass diese Ausgestaltung auch für andere Verläufe der Linienheizelemente 15,15' wie den rechteckförmigen, mäanderförmigen, dreiecksförmigen oder sinusförmigen Verlauf, zu einer Verbesserung der Homogenität der Heizleistungsverteilung und der Temperaturverteilung führt.

Figur 3D zeigt ein alternatives erfindungsgemäßes Ausführungsbeispiels. Im Unterschied zum Ausführungsbeispiel aus Figur 3B ist hier der Trennbereich 19 in Form von zwei Trennbereichen 19.1 und 19.2 ausgebildet, die jeweils nur eine Breite d_{1,2} von 0,25 mm aufweisen. Die Trennbereiche 19.1, 19.2 sind derart ausgebildet, dass sie einen von der umgebenden Heizschicht 6 elektrisch isolierten Bereich der Heizschicht 6 bilden. Die Verbindungsleiter 23" und 23"' sind dann auf dem elektrisch isolierten Bereich zwischen den Trennbereichen 19.1,19.2 angeordnet.

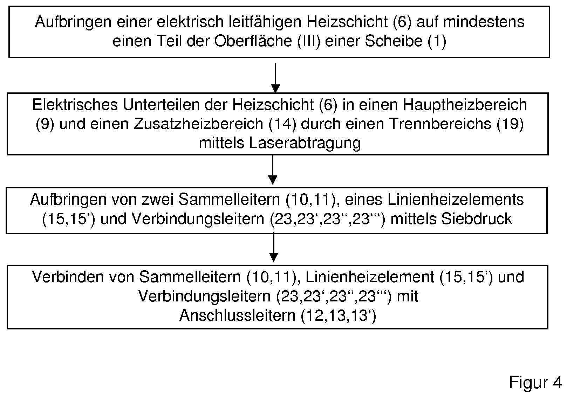

Figur 4 zeigt den schematischen Ablauf eines beispielshaften erfindungsgemäßen Verfahrens zur Herstellung einer erfindungsgemäßen transparenten Scheibe 1.

Im Folgenden wird ein beispielhaftes Herstellungsverfahren der Windschutzscheibe 1 schematisch beschrieben:
Zunächst werden Außen- und Innenscheibe 2, 3 in der gewünschten trapezförmigen Kontur aus einem Glasrohling geschnitten. Anschließend wird die Innenscheibe 3 mit der Heizschicht 6 durch Sputtern beschichtet, wobei der Randstreifen 7 durch Einsatz einer Maske nicht beschichtet wird. Alternativ wäre es auch möglich, dass zunächst ein Rohling beschichtet wird, aus dem dann die Innenscheibe 3 geschnitten wird. Die auf diese Weise vorbehandelte Innenscheibe 3 wird zur Formung des Randstreifens 7 entschichtet, was in der industriellen Serienfertigung beispielsweise mittels eines mechanisch abtragenden Schleifrads oder durch Laserabtragung erfolgen kann.

Anschließend oder zeitgleich wird die Heizscheibe 6 in einen Hauptheizbereich 9 und einen Zusatzheizbereich 14 elektrisch isolierend unterteilt, beispielsweise durch Entschichten eines Trennbereichs 19 oder mehrer Trennbereiche 19.1,19.2. Der Trennbereich 19,19.1,19.2 wird bevorzugt durch Laserabtragung entschichtet. Dies hat den besonderen Vorteil, dass eine sichere elektrische Isolation erzielt werden kann und gleichzeitig der Trennbereich 19, 19.1,19.2 optisch nur wenig auffällig ist.

Anschließend werden die beiden Sammelleiter 10, 11, das Linienheizelement 15,15' sowie etwaige Verbindungsleiter 23,23',23",23"' beispielsweise im Siebdruckverfahren auf die Innenscheibe 3 aufgedruckt. Als Druckpaste kann beispielsweise eine Silberdruckpaste verwendet werden. Anschließend wird die Druckpaste voreingebrannt, gefolgt von einem Biegen der Scheiben 2, 3 bei hoher Temperatur. Eine elektrische Verbindung der Sammelleiter 10,11 mit den ersten und zweiten Anschlussleitern 12, 13, 13' kann beispielsweise durch Löten oder Fixieren mittels eines leitfähigen Klebstoffs beispielsweise im Ultraschallschweißverfahren erfolgen. Anschließend erfolgt das Zusammenlegen von Außen- und Innenscheibe 2, 3 und Verkleben mittels der Klebeschicht 4.

Die Erfindung stellt eine transparente Scheibe 1 mit elektrischer Heizschicht 6 zur Verfügung, bei der in einem Zusatzheizbereich 14 der Scheibe 1 zumindest ein Linienheizelement 15,15' angeordnet ist, das an die elektrischen Anschlussmittel 10,11,12, 13,13' der Heizschicht 6 angeschlossen ist. Auf separate Außenanschlüsse für das Linienheizelement 15,15' kann in vorteilhafter Weise verzichtet werden. Durch die erfindungsgemäße Ausbildung des Linienheizelements 15,15' in elektrischem Kontakt mit der Heizschicht 6 wird eine große Homogenität der Heizleistungsverteilung und der Temperaturverteilung beim elektrischen Beheizen erzielt. Dies war für den Fachmann unerwartet und überraschend.

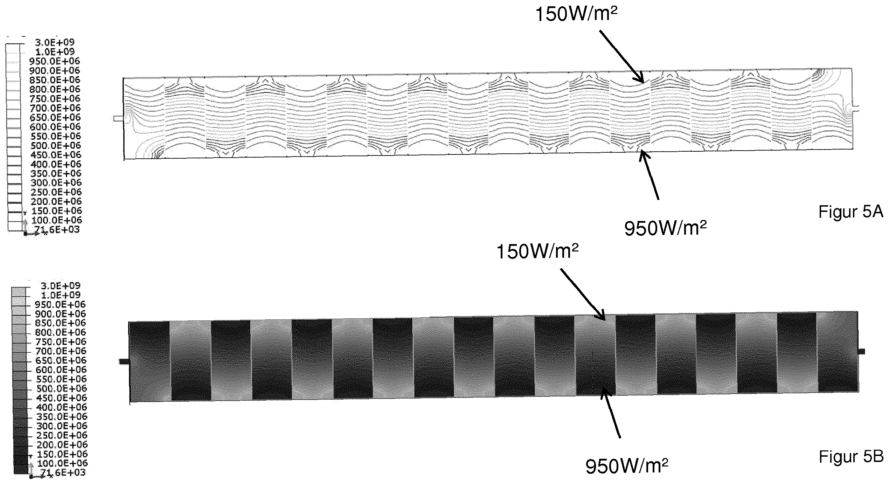

Figur 5A und Figur 5B zeigen die Simulation der Heizleistungsverteilung in einer Heizschicht 6 eines Zusatzheizbereichs 14 mit rechteckigem Verlauf des Linienheizelements 15. Figur 5A zeigt dabei ein Isolinien-Diagramm, das heißt ein Diagramm von Linien mit einem gleichen Wert in der Heizleistungsverteilung. Figur 5B zeigt ein Graustufen-Diagramm der Heizleistungsverteilung. Es ist jeweils die Heizleistungsverteilung als Heizleistungsdichte in Einheiten W/m² dargestellt.

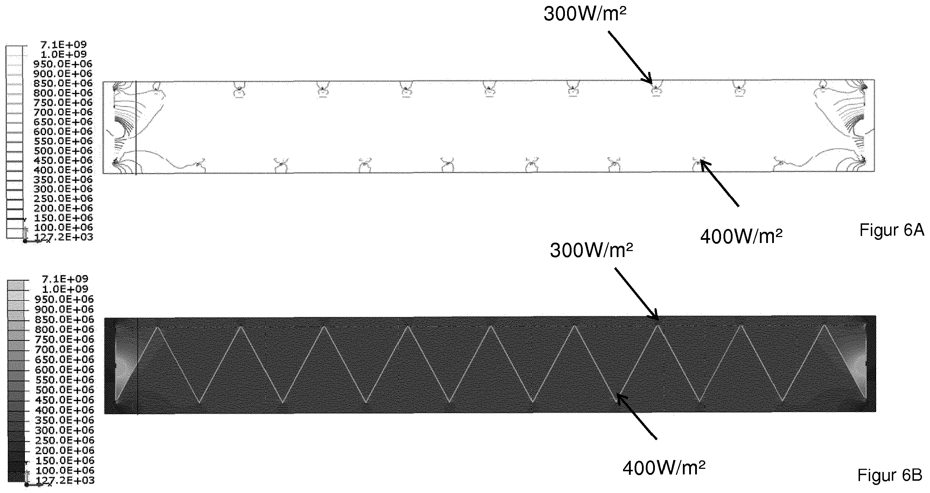

Figur 6A und Figur 6B zeigen die Simulation der Heizleistungsverteilung in einer Heizschicht 6 eines Zusatzheizbereichs 14 mit dreieckförmigem Verlauf des Linienheizelements 15. Figur 6A zeigt dabei ein Isolinien-Diagramm, das heißt ein Diagramm von Linien mit einem gleichen Wert in der Heizleistungsverteilung. Figur 6B zeigt ein Graustufen-Diagramm der Heizleistungsverteilung. Es ist jeweils die Heizleistungsverteilung als Heizleistungsdichte in Einheiten W/m² dargestellt.

Die Figuren 5A und 5B und die Figuren 6A und 6B unterscheiden sich durch die Form des Verlaufs des Linienheizelements 15.

Für die Simulation wurden jeweils ein rechteckiger Streifen eine Heizschicht 6 mit einem Flächenwiderstand von 0,9 Ohm/Quadrat und einer Versorgungsspannung von 14 V an den beiden Enden des Linienheizelements 15 zugrunde gelegt. Die Amplitude des Linienverlaufs betrug jeweils 80 mm von Peak-to-Peak und der Periodenabstand betrug 80 mm. Der periodische Verlauf wird jeweils 9-mal wiederholt.

Figur 5A zeigt das Isolinien-Diagramm und Figur 5B das Graustufen-Diagramm eines rechteckförmigen Verlaufs des Linienheizelements 15, wie es in Figur 1E ausschnittsweise dargestellt ist. In den Figuren 5A und 5B verläuft das Linienheizelement 15 in den Abschnitten 18a parallel zu dem Linienheizelement 15 in den Abschnitten 18b. Das heißt der Abstand zwischen den Abschnitten 18a vor dem Umkehrbereich 29 und den Abschnitten 18b nach dem Umkehrbereich 29 ist konstant. Der Strom I_{Z1} entlang des Linienheizelements 15 fließt im Abschnitt 18a antiparallel (also der Flussrichtung entgegengesetzt) durch das Linienheizelement 15 im Abschnitt 18b. Gleichzeitig verläuft der Strom I_{Z1} entlang der Linienheizelemente 15 in den Abschnitt 18a und 18b orthogonal zur Gesamtstromrichtung durch den Zusatzheizbereich 14 und orthogonal zu dem Stromfluss I_{H1}, I_{H2} und I_{H3} durch die Heizschicht 6.

In dem Umkehrbereich 29, in denen ein weiterer Abschnitt 28 des Linienheizelements 15 die Abschnitte 18a und 18b des Linienheizelements direkt verbindet, fließt ein Strom I_{Z2} durch weiteren den Abschnitt 28 des Linienheizelements 15. Durch den Stromfluss I_{Z2} verringert sich die Potentialdifferenz zwischen den zum Abschnitt 28 benachbarten Bereichen des Linienheizelements 15 in den Abschnitten 18a und 18b. Dies hat zur Folge, dass der Stromfluss I_{H3} durch die Heizschicht 6 in diesen benachbarten Bereichen geringer ist, als der Stromfluss I_{H1} und I_{H2} durch die Heizschicht 6 in weiter entfernten Bereichen. Aufgrund der antiparallelen Anordnung des Linienheizelements 15 in den Abschnitten 18a und 18b ist der Abstand zwischen den Abschnitten 18a und 18b zueinander äquidistant. Der geringere Stromfluss I_{H3} durch die Heizschicht 6 führt zu einer drastischen Verringerung der Heizleistungsdichte in den zum Abschnitt 28 benachbarten Bereich und zu einer deutlichen Erhöhung der Heizleistungsdichte in den entfernten Bereichen. In den Figuren 5A und 5B beträgt die Heizleistungsdichte in den zum Abschnitt 28 benachbarten Bereichen 150 W/m² und in den weiter entfernten Bereichen bis zu 950 W/m². Eine hohe Heizleistungsdichte von hier 950 W/m² kann zu einer beschleunigten Alterung und Degradation der Heizschicht 6 führen und ist unerwünscht. Außerdem entsteht eine hohe Inhomogenität in der Heizleistungsverteilung der Heizschicht 6, die ebenfalls unerwünscht ist.

Figur 6A zeigt das Isolinien-Diagramm und Figur 6B das Graustufen-Diagramm eines dreieckförmigen Verlaufs des Linienheizelements 15, wie es in Figur 1D ausschnittsweise dargestellt ist. In den Figuren 6A und 6B grenzen die Abschnitte 18a und 18b des Linienheizelements 15 im Umkehrpunkt 27 unmittelbar aneinander. Aufgrund des dreieckförmigen Verlaufs sind die Linienelemente 15 der Abschnitte 18a weder parallel noch antiparallel zu den Linienelementen 15 der Abschnitte 18b angeordnet. Der Abstand zwischen den Abschnitten 18a und 18b nimmt in Verlaufsrichtung kontinuierlich ab. Das heißt der Strom I_{Z} entlang des Linienheizelements 15 im Abschnitt 18a verläuft weder parallel noch antiparallel zum Strom I_{Z} durch das Linienheizelement 15 im Abschnitt 18b. An den Umkehrpunkten 27 an denen die Abschnitte 18a und 18b des Linienheizelements 15 aneinander grenzen, das heißt an den Punkten maximaler oder minimaler Amplitude des dreiecksförmigen Verlaufs, verringert sich die Potentialdifferenz zwischen dem Linienheizelement 15 in den entsprechenden Abschnitten 18a und 18b da die Abschnitte 18a und 18b im Umkehrpunkt 27 elektrisch leitend miteinander verbunden sind.

Gleichzeitig verringert sich der Abstand zwischen dem Linienheizelement 15 in den Abschnitten 18a und 18b auf Grund des dreiecksförmigen Verlaufs. Das heißt der Abstand zwischen entsprechenden Stellen des Linienheizelements 15 in Abschnitt 18a zu Stellen des Linienheizelements 15 in Abschnitt 18b nimmt bei Annäherung an die Verbindungsstelle im Umkehrpunkt 27 zwischen Abschnitt 18a und Abschnitt 18b in etwa proportional zu dem Maße ab, wie die Potentialdifferenz sinkt. Dies hat zur Folge, dass der Stromfluss durch die Heizschicht 6 näherungsweise konstant bleibt, das heißt I_{H3} ist ungefähr so groß wie I_{H2} und ungefähr so groß wie I_{H1}. Bei konstantem Flächenwiderstand der Heizschicht 6 führt der konstante Strom I_{H1,2,3} zu einer konstanten Heizleistungsdichte.

In den Figuren 6A und 6B beträgt die maximale Heizleistungsdichte 400 W/m² und die minimale Heizleistungsdichte 350 W/m². Das heißt die Heizleistungsverteilung in der Heizschicht 6 ist sehr homogen und in einem optimalen Arbeitsbereich der Heizschicht 6. Dies ist besonders Vorteilhaft um Überhitzungen und eine beschleunigte Alterung und Degradation der Heizschicht 6 zu vermeiden. Dies war für die Erfinder unerwartet und überraschend. Gleichzeitig konnte durch die Anordnung eines erfindungsgemäßen Linienheizelements 15 die Heizleistung im Zusatzheizbereich 14 erhöht werden.

### Bezugszeichenliste

- 1: Scheibe, Windschutzscheibe
- 2: Einzelscheibe, Außenscheibe
- 3: Einzelscheibe, Innenscheibe
- 4: Klebeschicht
- 5: Scheibenrand
- 5a, 5a': langer Scheibenrand
- 5b, 5b': kurzer Scheibenrand
- 6: Heizschicht
- 7: Randstreifen
- 8: Heizschichtrand
- 9: Hauptheizbereich
- 10: erster Sammelleiter
- 11: zweiter Sammelleiter
- 12: erster Anschlussleiter
- 13, 13': zweiter Anschlussleiter
- 14: Zusatzheizbereich
- 15, 15': Linienheizelement
- 16: Heizstrom
- 17: Heizfeld
- 18a, 18b: Abschnitt des Linienheizelements 15
- 19,19.1,19.2: Trennbereich
- 20: erster Außenanschluss
- 21, 21': zweiter Außenanschluss
- 23, 23': Verbindungsleiter
- 24: Zuleitung
- 25: Spannungsquelle
- 26,26',26",26"": elektrische Leitungsverbindung
- 27: Umkehrpunkt
- 28: weiterer Abschnitt des Linienheizelements 15
- 29: Umkehrbereich
- A-A': Querschnittslinie,
- B,C: Ausschnitt
- b: Breite des Linienheizelements 15,15'
- d: Breite des Trennbereichs 19
- g: Breite des Zusatzheizbereichs 14
- I_{H1}, I_{H2}, I_{H3}: Strom durch die Heizschicht 6 im Zusatzheizbereich 14
- I_{Z}, I_{Z1}, I_{Z2}: Strom durch Linienheizelement 15,15'
- r: Breite des Randstreifens 7
- II: Scheibenoberfläche der Außenscheibe 2
- III: Scheibenoberfläche der Innenscheibe 3

## Patentansprüche

1. Transparente Scheibe (1) mindestens umfassend:
- eine elektrische Heizschicht (6), die sich zumindest über einen Teil einer Scheibenfläche (III) erstreckt und die in einen Hauptheizbereich (9) und einen davon elektrisch isolierten Zusatzheizbereich (14) unterteilt ist,
- Anschlussmittel (10, 11, 12, 13, 13'), die mit einer Spannungsquelle (25) elektrisch verbindbar sind und die mindestens einen ersten Sammelleiter (10) und einen zweiten Sammelleiter (11) umfassen, wobei die Sammelleiter (10,11) jeweils mit der Heizschicht (6) im Hauptheizbereich (9) in direktem Kontakt elektrisch leitend so verbunden sind, dass nach Anlegen einer Speisespannung ein Heizstrom (16) über ein von der Heizschicht (6) gebildetes Heizfeld (17) fließt,
- mindestens ein elektrisches Linienheizelement (15,15'), das zumindest abschnittsweise im Zusatzheizbereich (14) der Heizschicht (6) angeordnet ist,
wobei
- das Linienheizelement (15,15') in direktem Kontakt elektrisch leitend mit der Heizschicht (6) verbunden ist,
- das Linienheizelement (15,15') mit der Spannungsquelle (25) oder einer weiteren Spannungsquelle elektrisch verbindbar ist,
- das Linienheizelement (15,15') einen solchen ohmschen Widerstand hat, dass nach Anlegen der Speisespannung der Zusatzheizbereich (14) heizbar ist und
- das Linienheizelement (15,15') derart ausgebildet ist, dass nach Anlegen der Speisespannung zwischen Abschnitten (18a,18b) des Linienheizelements (15,15') ein Heizstrom durch die Heizschicht (6) im Zusatzheizbereich (14) fließen kann und der Zusatzheizbereich (14) dadurch zusätzlich heizbar ist,
wobei das Linienheizelement (15,15') mäanderförmig und nicht rechteckförmig und bevorzugt sinusförmig oder dreiecksförmig ausgebildet ist,
wobei das Linienheizelement (15,15') in elektrischer Parallelschaltung zum Heizfeld (17) mit den Anschlussmitteln (10, 11, 12, 13, 13') elektrisch verbunden ist.

2. Scheibe (1) nach Anspruch 1, wobei mindestens ein Verbindungsleiter (23,23',23",23'") das Linienheizelements (15,15') mit mindestens einem der Anschlussmittel (10, 11, 12, 13, 13') elektrisch leitend verbindet.

3. Scheibe (1) nach Anspruch 2, wobei die Verbindungsleiter (23,23',23",23'") zumindest bereichsweise in einem heizschichtfreien Randstreifen (7) der Scheibe (1) und/oder zumindest bereichsweise in einem heizschichtfreien Trennbereich (19) zwischen dem Hauptheizbereich (9) und dem Zusatzheizbereich (14) angeordnet sind.

4. Scheibe (1) nach einem der Ansprüche 1 bis 3, wobei zumindest ein Anschluss des Linienheizelements (15, 15') einen der Sammelleiter (10, 11) direkt elektrisch kontaktiert.

5. Scheibe (1) nach einem der Ansprüche 1 bis 4, wobei die Anschlussmittel (10, 11, 12, 13, 13') an die Sammelleiter (10, 11) angeschlossene Anschlussleiter (12, 13, 13') umfassen und mindestens ein Anschluss des Linienheizelement (15,15') zumindest einen der Anschlussleiter (12, 13, 13') direkt elektrisch kontaktiert.

6. Scheibe (1) nach einem der Ansprüche 2 bis 5, wobei das Linienheizelement (15,15') und/oder der Verbindungsleiter (23,23',23",23'") als Heizdraht oder als Heizlinie aus einer aufgedruckten elektrisch leitfähigen Paste ausgebildet ist.

7. Scheibe (1) nach Anspruch 6, wobei die Heizlinie eine Dicke von 6 µm bis 14 µm, eine Breite b von 0,2mm bis 8 mm , eine Länge L von 1000 mm bis 10000 mm und/oder einen spezifischen Widerstand von 0,5*10⁻⁸ Ohm*m bis 5*10⁻⁸ Ohm*m aufweist.

8. Scheibe (1) nach Anspruch 6 oder 7, wobei das Linienheizelement (15,15') so ausgebildet ist, dass bei einer Speisespannung im Bereich von 12 bis 48 Volt eine Enteisungsleistung im Bereich von 400 bis 1000 W/m² Scheibenfläche zur Verfügung gestellt werden kann.

9. Scheibe (1) nach einem der Ansprüche 6 bis 8, wobei das Linienheizelement (15,15') einen ohmschen Widerstand von 0,5 Ohm/m bis 4 Ohm/m aufweist.

10. Scheibe (1) nach einem der Ansprüche 6 bis 9, wobei das Linienheizelement (15,15') trapezförmig ausgebildet ist und bevorzugt die Summe der Grundseiten kleiner oder gleich der Hälfte des Periodenabstands beträgt.

11. Scheibe (1) nach einem der Ansprüche 6 bis 10, wobei das Linienheizelement (15,15') einen periodischen Verlauf hat und innerhalb einer Periode Abschnitte (18a,18b) des Linienheizelements (15,15') nicht parallel zueinander angeordnet sind und bevorzugt innerhalb einer Periode Abschnitte (18a,18b), die nicht parallel zur Stromflussrichtung durch die Heizschicht 6 angeordnet sind, nicht parallel zueinander angeordnet sind.

12. Scheibe (1) nach einem der Ansprüche 6 bis 11, wobei das Linienheizelement (15,15') einen periodischen Verlauf hat und innerhalb einer Periode der Abstand zwischen dem Abschnitt (18a) des Linienheizelements (15,15') vor einem Umkehrpunkt (27) oder vor einem Umkehrbereich (29) und dem Abschnitt (18b) des Linienheizelements (15,15') nach dem Umkehrpunkt (27) oder nach einem Umkehrbereich (29) kontinuierlich abnimmt.

13. Scheibe (1) nach einem der Ansprüche 1 bis 12, welche als Verbundscheibe mit zwei durch eine thermoplastische Klebeschicht (4) miteinander verbundenen Einzelscheiben (2, 3) ausgeführt ist, wobei sich die Heizschicht (6) auf zumindest einer Oberfläche (II,III) der Einzelscheiben und/oder auf einer Oberfläche eines zwischen den Einzelscheiben angeordneten Trägers befindet.

14. Verfahren zur Herstellung einer transparenten Scheibe (1), wobei zumindest
a) eine elektrische Heizschicht (6) auf zumindest einem Teil einer Scheibenfläche (III) abgeschieden wird,
b) die elektrische Heizschicht (6) in einen Hauptheizbereich (9) und einen davon elektrisch isolierten Zusatzheizbereich (14) unterteilt wird, bevorzugt durch Laser-abtragung,
c) mindestens ein erster Sammelleiter (10) und ein zweiter Sammelleiter (11) auf die Heizschicht (6) im Hauptheizbereich (9) aufgebracht werden, wobei die Sammelleiter (10,11) in direktem Kontakt elektrisch leitend mit der Heizschicht (6) verbunden werden, so dass nach Anlegen einer Speisespannung aus einer Spannungsquelle (25) an mit den Sammelleiter (10,11) verbindbaren Anschlussleitern (12,13,13') ein Heizstrom (16) über ein von der Heizschicht (6) gebildetes Heizfeld (17) fließen kann,
d) mindestens ein elektrisches Linienheizelement (15,15') zumindest abschnittsweise auf die Heizschicht (6) im Zusatzheizbereich (14) aufgebracht wird, wobei
- das Linienheizelement (15,15') in direktem Kontakt elektrisch leitend mit der Heizschicht (6) verbunden wird,
- das Linienheizelement (15,15') in elektrischer Parallelschaltung zum Heizfeld (17) mit den Anschlussleitern (12, 13, 13') oder mit den Sammelleitern (10,11) der Heizschicht (6) im Hauptheizbereich (9) elektrisch verbunden wird,
- das Linienheizelement (15,15') einen solchen ohmschen Widerstand hat, dass nach Anlegen der Speisespannung der Zusatzheizbereich (14) beheizt werden kann und
- das Linienheizelement (15,15') derart ausgebildet ist, dass nach Anlegen der Speisespannung zwischen Abschnitten (18a,18b) des Linienheizelements (15,15') ein Heizstrom durch die Heizschicht (6) im Zusatzheizbereich (14) fließen kann und der Zusatzheizbereich (14) dadurch zusätzlich beheizt werden kann, wobei das Linienheizelement (15,15') mäanderförmig und nicht rechteckförmig und bevorzugt sinusförmig oder dreiecksförmig ausgebildet ist,
e) mindestens ein Verbindungsleiter (23,23',23",23'") auf die Scheibenfläche (III) aufgebracht wird, durch den das Linienheizelement (15,15') mit den Sammelleitern (10,11) verbunden wird und/oder mit Anschlussleitern (12, 13, 13') verbunden werden kann,
f) Anschlussleiter (12, 13, 13') auf die Scheibenoberfläche (III) aufgebracht werden und mit den Sammelleitern (10,11), dem Linienheizelement (15,15') und/oder den Verbindungsleitern (23,23',23",23'") in direktem Kontakt elektrisch verbunden werden.

15. Verfahren zur Herstellung einer transparenten Scheibe (1) nach Anspruch 14, wobei die Sammelleiter (10,11), das Linienheizelement (15,15') und die Verbindungsleiter (23,23',23",23'") durch Siebdruck aus einer elektrisch leitfähigen Paste auf die Scheibenoberfläche (III) aufgebracht werden und bevorzugt die Verfahrensschritte c), d) und e) gleichzeitig durchgeführt werden.

16. Verwendung einer transparenten Scheibe (1) nach einem der Ansprüche 1 bis 13 als funktionales und/oder dekoratives Einzelstück und als Einbauteil in Möbeln, Geräten und Gebäuden, sowie in Fortbewegungsmitteln zur Fortbewegung auf dem Lande, in der Luft oder zu Wasser, insbesondere in Kraftfahrzeugen beispielsweise als Windschutzscheibe, Heckscheibe, Seitenscheibe und/oder Glasdach und bevorzugt als Windaschutzscheibe oder Heckscheibe, wobei eine Ruhe- oder Parkstellungszone von zum Wischen der Scheibe (1) vorgesehenen Scheibenwischern im Zusatzheizbereich (14) der Scheibe (1) angeordnet ist.

## Claims

1. Transparent pane (1) at least comprising:
- an electrical heating layer (6), which extends at least over part of a pane surface (III) and which is divided into a main heating region (9) and an additional heating region (14) electrically isolated therefrom,
- connection means (10, 11, 12, 13, 13'), which can be electrically connected to a voltage source (25) and which comprise at least a first collecting conductor (10) and a second collecting conductor (11), wherein the collecting conductors (10,11) are electrically conductively connected to the heating layer (6) in the main heating region (9) in direct contact such that after application of a supply voltage, a heating current (16) flows across a heating field (17) formed by the heating layer (6),
- at least one electrical line heating element (15,15'), which is arranged, at least in sections, in the additional heating region (14) of the heating layer (6),
wherein
- the line heating element (15,15') is connected electrically conductively to the heating layer (6) in direct contact,
- the line heating element (15,15') can be electrically connected to the voltage source (25) or to another voltage source,
- the line heating element (15,15') has such ohmic resistance that after application of the supply voltage, the additional heating region (14) can be heated, and
- the line heating element (15,15') is implemented such that after application of the supply voltage, a heating current can flow between sections (18a,18b) of the line heating element (15,15') through the heating layer (6) in the additional heating region (14) and the additional heating region (14) can thus be additionally heated,
wherein the line heating element (15, 15') is implemented meander-shaped and not rectangular and preferably sinusoidal or triangular,
wherein the line heating element (15, 15') is electrically connected to the connection means (10, 11, 12, 13, 13') in parallel electrical connection with the heating field (17).

2. Pane (1) according to claim 1, wherein at least one connection conductor (23,23',23",23'") electrically conductively connects the line heating element (15,15') to at least one of the connection means (10, 11, 12, 13, 13').

3. Pane (1) according to claim 2, wherein the connection conductors (23,23',23",23'") are arranged, at least in regions, in a heating-layer-free edge strip (7) of the pane (1) and/or, at least in regions, in a heating-layer-free separating region (19) between the main heating region (9) and the additional heating region (14).

4. Pane (1) according to one of claims 1 through 3, wherein at least one connection of the line heating element (15, 15') electrically contacts one of the collecting conductors (10, 11) directly.

5. Pane (1) according to one of claims 1 through 4, wherein the connection means (10, 11, 12, 13, 13') comprise connecting conductors (12, 13, 13') connected to the collecting conductors (10, 11) and at least one connection of the line heating element (15,15') electrically contacts at least one of the connecting conductors (12, 13, 13') directly.

6. Pane (1) according to one of claims 2 through 5, wherein the line heating element (15,15') is implemented as a heating wire or as a heating line made of a printed-on electrically conductive paste.

7. Pane (1) according to claim 6, wherein the heating line has a thickness of 6 µm to 14 µm, a width b of 0.2 mm to 8 mm, a length L of 1000 mm to 10000 mm, and/or specific resistance of 0.5*10⁻⁸ ohm*m to 5*10⁻⁸ ohm*m.

8. Pane (1) according to one of claims 6 or 7, wherein the line heating element (15,15') is implemented such that with a supply voltage in the range from 12 to 48 V, deicing power in the range from 400 to 1000 W/m² of pane surface can be made available.

9. Pane (1) according to one of claims 6 through 8, wherein the line heating element (15,15') has ohmic resistance of 0.5 ohm/m to 4 ohm/m.

10. Pane (1) according to one of claims 6 through 9, wherein the line heating element (15,15') is implemented trapezoidal and, preferably, the sum of the bases is less than or equal to half of the periodic interval.

11. Pane (1) according to one of claims 6 through 10, wherein the line heating element (15,15') has a periodic course and within a period, sections (18a,18b) of the line heating element (15,15') are arranged nonparallel to one another and, preferably, within a period, sections (18a,18b), which are arranged nonparallel to the direction of current flow through the heating layer (6), are arranged nonparallel to one another.

12. Pane (1) according to one of claims 6 through 11, wherein the line heating element (15,15') has a periodic course and within a period, the distance between the section (18a) of the line heating element (15,15') before a reversal point (27) or before a reversal region (29) and the section (18b) of the line heating element (15,15') after the reversal point (27) or after a reversal region (29) decreases continuously.

13. Pane (1) according to one of claims 1 through 12, which is implemented as a composite pane with two individual panes (2, 3) bonded to one another by a thermoplastic adhesive layer (4), wherein the heating layer (6) is situated on at least one surface (II,III) of the individual panes and/or on one surface of a carrier arranged between the individual panes.

14. Method for producing a transparent pane (1), wherein at least
a) an electrical heating layer (6) is deposited on at least one part of a pane surface (III),
b) the electrical heating layer (6) is divided into a main heating region (9) and an additional heating region (14) electrically isolated therefrom, preferably by laser ablation,
c) at least one first collecting conductor (10) and one second collecting conductor (11) are applied on the heating layer (6) in the main heating region (9), wherein the collecting conductors (10,11) are connected electrically conductively to the heating layer (6) in direct contact such that after application of a supply voltage from a voltage source (25) on connecting conductors (12,13,13') connectable to the collecting conductor (10,11), a heating current (16) can flow across a heating field (17) formed by the heating layer (6),
d) at least one electrical line heating element (15,15') is applied, at least in sections, on the heating layer (6) in the additional heating region (14), wherein
- the line heating element (15,15') is connected electrically conductively to the heating layer (6) in direct contact,
- the line heating element (15,15') is electrically connected to the connecting conductors (12, 13, 13') in parallel electrical connection with the heating field (17) or to the collecting conductors (10,11) of the heating layer (6) in the main heating region (9),
- the line heating element (15,15') has such ohmic resistance that after application of the supply voltage, the additional heating region (14) can be heated, and
- the line heating element (15,15') is implemented such that after application of the supply voltage between sections (18a,18b) of the line heating element (15,15'), a heating current can flow through the heating layer (6) in the additional heating region (14) and the additional heating region (14) can thus be additionally heated, wherein the line heating element (15, 15') is implemented meander-shaped and not rectangular and preferably sinusoidal or triangular,
e) at least one connection conductor (23,23',23",23'") is applied on the pane surface (III), by which the line heating element (15,15') is connected to the collecting conductors (10,11) and/or can be connected to connecting conductors (12, 13, 13'),
f) connecting conductors (12, 13, 13') are applied on the pane surface (III) and are electrically connected to the collecting conductors (10,11), the line heating element (15,15'), and/or the connection conductors (23,23',23",23'") in direct contact.

15. Method for producing a transparent pane (1) according to claim 14, wherein the collecting conductors (10,11), the line heating element (15,15'), and the connection conductors (23,23',23",23'") are applied by screen printing an electrically conductive paste onto the pane surface (III) and preferably the process steps c), d), and e) are performed simultaneously.

16. Use of a transparent pane (1) according to one of claims 1 through 13 as a functional and/or decorative single piece and as an assembly part in furniture, appliances, and buildings, as well as in means of transportation for travel on land, in the air, or on water, in particular in motor vehicles, for example, as a windshield, rear window, side window, and/or glass roof and preferably as a windshield or rear window, wherein a resting or parking zone of windshield wipers provided to wipe the pane (1) is arranged in the additional heating region (14) of the pane (1).

## Revendications

1. Vitre transparente (1) comprenant au moins:
- une couche chauffante électrique (6), qui s'étend au moins sur une partie d'une surface de vitre (III) et qui est divisée en une région de chauffage principale (9) et une région de chauffage supplémentaire (14) isolée électriquement de celle-ci,
- des moyens de connexion (10, 11, 12, 13, 13'), qui peuvent être reliés électriquement à une source de tension (25) et qui comprennent au moins un premier conducteur collecteur (10) et un deuxième conducteur collecteur (11), dans lesquels les conducteurs collecteurs (10, 11) sont reliés de manière électriquement conductrice à la couche chauffante (6) dans la région de chauffage principale (9) en contact direct de telle sorte que, après application d'une tension d'alimentation, un courant de chauffage (16) circule à travers un champ de chauffage (17) formé par la couche chauffante (6),
- au moins un élément chauffant de ligne électrique (15, 15'), qui est disposé, au moins par sections, dans la région de chauffage supplémentaire (14) de la couche chauffante (6),
où
- l'élément de chauffage de ligne (15, 15') est relié de manière électriquement conductrice à la couche chauffante (6) en contact direct,
- l'élément chauffant de ligne (15, 15') peut être connecté électriquement à la source de tension (25) ou à une autre source de tension,
- l'élément de chauffage de ligne (15, 15') a une résistance ohmique telle qu'après application de la tension d'alimentation, la région de chauffage supplémentaire (14) peut être chauffée, et
- l'élément chauffant de ligne (15, 15') est réalisé de telle sorte qu'après l'application de la tension d'alimentation, un courant de chauffage peut circuler entre les sections (18a, 18b) de l'élément chauffant de ligne (15, 15') à travers la couche chauffante (6) dans la région de chauffage supplémentaire (14) et la région de chauffage supplémentaire (14) peut ainsi être chauffée de manière supplémentaire,
dans lequel l'élément de chauffage de ligne (15, 15') est réalisé en forme de méandre et non rectangulaire et de préférence sinusoïdal ou triangulaire,
l'élément de chauffage linéaire (15, 15') étant relié électriquement au moyen de raccordement (10, 11, 12, 13, 13') en parallèle avec le champ de chauffage (17).

2. Vitre (1) selon la revendication 1, dans laquelle au moins un conducteur de connexion (23, 23', 23", 23"') relie électriquement l'élément chauffant linéaire (15, 15') à au moins un des moyens de connexion (10, 11, 12, 13, 13').

3. Vitre (1) selon la revendication 2, dans laquelle les conducteurs de connexion (23, 23', 23", 23"') sont disposés, au moins par régions, dans une bande de bordure (7) sans couche de chauffage de la vitre (1) et/ou, au moins par régions, dans une région de séparation (19) sans couche de chauffage entre la région de chauffage principale (9) et la région de chauffage supplémentaire (14).

4. Vitre (1) selon l'une des revendications 1 à 3, dans laquelle au moins une connexion de l'élément chauffant linéaire (15, 15') est en contact électrique direct avec l'un des conducteurs collecteurs (10, 11).

5. Vitre (1) selon l'une des revendications 1 à 4, dans laquelle les moyens de connexion (10, 11, 12, 13, 13') comprennent des conducteurs de connexion (12, 13, 13') reliés aux conducteurs collecteurs (10, 11) et au moins une connexion de l'élément chauffant de ligne (15, 15') est en contact électrique direct avec au moins un des conducteurs de connexion (12, 13, 13').

6. Vitre (1) selon l'une des revendications 2 à 5, dans laquelle l'élément chauffant de ligne (15, 15') est réalisé sous la forme d'un fil chauffant ou d'une ligne chauffante en pâte électriquement conductrice imprimée.

7. Vitre (1) selon la revendication 6, dans laquelle la ligne chauffante a une épaisseur de 6 µm à 14 µm, une largeur b de 0,2 mm à 8 mm, une longueur L de 1000 mm à 10000 mm, et/ou une résistance spécifique de 0,5*10⁻⁸ ohm*m à 5*10⁻⁸ ohm*m.

8. Vitre (1) selon l'une des revendications 6 ou 7, dans laquelle l'élément chauffant de ligne (15, 15') est réalisé de telle sorte qu'avec une tension d'alimentation comprise entre 12 et 48 V, une puissance de dégivrage comprise entre 400 et 1000 W/m² de surface de vitre peut être mise à disposition.

9. Vitre (1) selon l'une des revendications 6 à 8, dans laquelle l'élément chauffant de ligne (15, 15') présente une résistance ohmique de 0,5 ohm/m à 4 ohm/m.

10. Vitre (1) selon l'une des revendications 6 à 9, dans laquelle l'élément chauffant de ligne (15, 15') est implanté de manière trapézoïdale et, de préférence, la somme des bases est inférieure ou égale à la moitié de l'intervalle périodique.

11. Vitre (1) selon l'une des revendications 6 à 10, dans laquelle l'élément chauffant de ligne (15, 15') présente une allure périodique et, à l'intérieur d'une période, des sections (18a, 18b) de l'élément chauffant de ligne (15, 15') sont disposées de manière non parallèle les unes par rapport aux autres et, de préférence, à l'intérieur d'une période, des sections (18a, 18b), qui sont disposées de manière non parallèle à la direction de passage du courant à travers la couche chauffante (6), sont disposées de manière non parallèle les unes par rapport aux autres.

12. Vitre (1) selon l'une des revendications 6 à 11, dans laquelle l'élément chauffant de ligne (15, 15') présente un parcours périodique et, à l'intérieur d'une période, la distance entre la section (18a) de l'élément chauffant de ligne (15, 15') avant un point d'inversion (27) ou avant une région d'inversion (29) et la section (18b) de l'élément chauffant de ligne (15, 15') après le point d'inversion (27) ou après une région d'inversion (29) diminue de manière continue.

13. Vitre (1) selon l'une des revendications 1 à 12, qui est réalisée comme une vitre composite avec deux vitres individuelles (2, 3) collées l'une à l'autre par une couche de colle thermoplastique (4), dans laquelle la couche chauffante (6) se trouve sur au moins une surface (II, III) des vitres individuelles et/ou sur une surface d'un support disposé entre les vitres individuelles.

14. Procédé de fabrication d'une vitre transparente (1), dans lequel au moins
a) une couche de chauffage électrique (6) est déposée sur au moins une partie d'une surface de vitre (III),
b) la couche de chauffage électrique (6) est divisée en une région de chauffage principale (9) et une région de chauffage supplémentaire (14) isolée électriquement de celle-ci, de préférence par ablation laser,
c) au moins un premier conducteur collecteur (10) et un deuxième conducteur collecteur (11) sont appliqués sur la couche chauffante (6) dans la région de chauffage principale (9), les conducteurs collecteurs (10, 11) étant reliés de manière électriquement conductrice à la couche chauffante (6) en contact direct de telle sorte qu'après application d'une tension d'alimentation provenant d'une source de tension (25) sur des conducteurs de connexion (12, 13, 13') pouvant être reliés au conducteur collecteur (10, 11), un courant de chauffage (16) peut circuler à travers un champ de chauffage (17) formé par la couche chauffante (6),
d) au moins un élément chauffant électrique de ligne (15, 15') est appliqué, au moins par sections, sur la couche chauffante (6) dans la région de chauffage supplémentaire (14), dans lequel
- l'élément de chauffage de ligne (15, 15') est relié de manière électriquement conductrice à la couche chauffante (6) en contact direct,
- l'élément chauffant de ligne (15, 15') est relié électriquement aux conducteurs de connexion (12, 13, 13') en connexion électrique parallèle avec le champ chauffant (17) ou aux conducteurs collecteurs (10, 11) de la couche chauffante (6) dans la région de chauffage principale (9),
- l'élément chauffant de ligne (15, 15') présente une résistance ohmique telle qu'après application de la tension d'alimentation, la région de chauffage supplémentaire (14) peut être chauffée, et
- l'élément chauffant de ligne (15, 15') est réalisé de telle sorte qu'après application de la tension d'alimentation entre des sections (18a, 18b) de l'élément chauffant de ligne (15, 15'), un courant de chauffage peut circuler à travers la couche chauffante (6) dans la région de chauffage supplémentaire (14) et la région de chauffage supplémentaire (14) peut ainsi être chauffée de manière supplémentaire, l'élément chauffant de ligne (15, 15') étant réalisé en forme de méandre et non rectangulaire et de préférence sinusoïdal ou triangulaire,
e) au moins un conducteur de raccordement (23, 23', 23", 23"') est appliqué sur la surface de la vitre (III), par lequel l'élément chauffant linéaire (15, 15') est relié aux conducteurs collecteurs (10, 11) et/ou peut être relié à des conducteurs de raccordement (12, 13, 13'),
f) des conducteurs de connexion (12, 13, 13') sont appliqués sur la surface de la vitre (III) et sont reliés électriquement aux conducteurs collecteurs (10, 11), à l'élément chauffant linéaire (15, 15') et/ou aux conducteurs de connexion (23, 23', 23", 23"') en contact direct.

15. Procédé de fabrication d'une vitre transparente (1) selon la revendication 14, dans lequel les conducteurs collecteurs (10, 11), l'élément chauffant de ligne (15, 15') et les conducteurs de connexion (23, 23', 23", 23"') sont appliqués par sérigraphie d'une pâte électriquement conductrice sur la surface de la vitre (III) et, de préférence, les étapes de procédé c), d) et e) sont réalisées simultanément.

16. Utilisation d'une vitre transparente (1) selon l'une des revendications 1 à 13 en tant que pièce unique fonctionnelle et/ou décorative et en tant qu'élément de montage dans des meubles, des appareils et des bâtiments, ainsi que dans des moyens de transport pour des déplacements sur terre, dans les airs ou sur l'eau, en particulier dans des véhicules automobiles, par exemple en tant que pare-brise, lunette arrière, vitre latérale et/ou toit en verre, et de préférence en tant que pare-brise ou lunette arrière, une région de repos ou de stationnement des essuie-glaces prévus pour essuyer la vitre (1) étant disposée dans la région de chauffage supplémentaire (14) de la vitre (1).
